(19) Europäisches Patentamt
European Patent Office
Office européen des brevets

(11) EP 4 582 587 A1

(12) **EUROPEAN PATENT APPLICATION**
published in accordance with Art. 153(4) EPC

(43) Date of publication:
**09.07.2025 Bulletin 2025/28**

(51) International Patent Classification (IPC):
**C23C 28/00** (2006.01)     **C22C 18/04** (2006.01)
**C23C 2/06** (2006.01)     **C23C 22/60** (2006.01)

(21) Application number: **23860417.7**

(52) Cooperative Patent Classification (CPC):
**C22C 18/04; C23C 2/06; C23C 22/60; C23C 28/00**

(22) Date of filing: **30.08.2023**

(86) International application number:
**PCT/JP2023/031546**

(87) International publication number:
**WO 2024/048655 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.08.2022   JP 2022138585**

(71) Applicant: **NIPPON STEEL CORPORATION**
**Chiyoda-ku**
**Tokyo 100-8071 (JP)**

(72) Inventors:
• **KAWAMOTO, Kosuke**
  **Tokyo 100-8071 (JP)**
• **SAITO, Mamoru**
  **Tokyo 100-8071 (JP)**
• **GOTO, Yasuto**
  **Tokyo 100-8071 (JP)**
• **SHOJI, Hiromasa**
  **Tokyo 100-8071 (JP)**

(74) Representative: **Zimmermann & Partner**
**Patentanwälte mbB**
**Postfach 330 920**
**80069 München (DE)**

(54) **SURFACE-TREATED STEEL SHEET**

(57)    The present disclosure provides a surface-treated steel sheet in which excellent corrosion resistance, excellent adhesiveness to an adhesive, and excellent blackening resistance are obtained, and furthermore, excellent dew formation discoloration resistance is also obtained. In a surface-treated steel sheet of the present embodiment, a plating layer contains, in mass%, Al: more than 5.0 to less than 25.0%, and Mg: more than 3.0 to less than 12.5%, with the balance being Zn in an amount of 65.0% or more and impurities. A chemical conversion coating formed on the plating layer contains Zr, V, P, and Co and acrylic resin. A V mass [V] mg/m$^2$ and a P mass [P] mg/m$^2$ in the chemical conversion coating satisfy Formula (1), and a content of Mg [Mg]b mass% in the plating layer and the V mass [V] mg/m$^2$ satisfy Formula (2).

$$0.60 \leq [V]/[P] \leq 2.80 \quad (1)$$

$$0 < [V]/[Mg]b \leq 20.00 \quad (2)$$

FIG. 2

# EP 4 582 587 A1

**Description**

## TECHNICAL FIELD

The present disclosure relates to a surface-treated steel sheet that has a plating layer and a chemical conversion coating on the surface thereof.

## BACKGROUND ART

A surface-treated steel sheet includes a base steel sheet, a plating layer formed on the base steel sheet, and a coating formed on the plating layer. Surface-treated steel sheets are widely utilized for applications such as building materials, automobiles, and household electrical appliances. The corrosion resistance of a surface-treated steel sheet is increased by having a plating layer and a coating.

Coatings that have been proposed as coatings for increasing the corrosion resistance of a surface-treated steel sheet include coatings composed of an inorganic material, organic resin coatings, and coatings composed of an inorganic material and organic resin, which are formed by chemical treatments such as a chromate treatment or a phosphate treatment.

For example, coatings composed of inorganic materials are disclosed in Japanese Patent Application Publication No. 2002-030460 (Patent Literature 1) and International Application Publication No. WO2007/123276 (Patent Literature 2). In Patent Literature 1, a metallic surface treating agent that contains a vanadium compound and a metallic compound containing at least one kind of metal selected from the group consisting of zirconium, titanium, molybdenum, tungsten, manganese, and cerium is proposed. Further, in Patent Literature 2, a composite coated zinc-containing plated steel material for which a treatment solution containing a basic zirconium compound, a vanadyl-containing compound, a phosphoric acid compound, a cobalt compound, an organic acid, and water is used is proposed.

Organic resin coatings are disclosed in International Application Publication No. WO2007/069783 (Patent Literature 3) and International Application Publication No. WO2009/004684 (Patent Literature 4). In Patent Literature 3, an organic resin coating formed by a surface treatment agent for metal materials composed of anionic water-dispersible resin and an alkali metal silicate is proposed. Further, in Patent Literature 4, an organic resin coating formed by a surface treatment agent composed of ammonium zirconium carbonate, a vanadium (IV) compound, an organophosphonic acid, and anionic water-dispersible acrylic resin is proposed.

Coatings composed of an inorganic material and organic resin are disclosed in Japanese Patent Application Publication No. 2003-055777 (Patent Literature 5) and Japanese Patent Application Publication No. 2005-097733 (Patent Literature 6). In Patent Literature 5, a surface-treated steel sheet in which a coating composed of a zirconium compound and a vanadium compound is formed on a Zn-Al-Mg-Si alloy plating is proposed. Further, in Patent Literature 6, a surface-treated steel sheet in which a coating composed of a vanadium compound, a phosphoric acid compound, a metallic composition, and acrylic resin composed of specific monomer components is formed on a Zn-Al alloy plating is proposed.

In the surface-treated steel sheets having these coatings, the corrosion resistance can be increased. However, in these surface-treated steel sheets, sufficient adhesiveness to an adhesive was not obtained in some cases. In addition, from the viewpoint of external appearance, it is also required to suppress the occurrence of a blackening phenomenon in the surface-treated steel sheets, in other words, to increase blackening resistance.

Therefore, a surface-treated steel sheet in which, as well as corrosion resistance, sufficient adhesiveness to an adhesive and sufficient blackening resistance are also obtained is proposed in International Application Publication No. WO2017/155028 (Patent Literature 7). The surface-treated steel sheet disclosed in Patent Literature 7 has a steel sheet, a plating layer containing zinc formed on the steel sheet, and a coating formed on the plating layer. The coating contains acrylic resin, zirconium, vanadium, phosphorus, and cobalt, and the area fraction of the acrylic resin in a region from the surface of the coating to a thickness of one-fifth of the coating thickness in a cross section of the coating is 80 to 100% by area, and the area fraction of the acrylic resin in a region that consists of a region from the center of the coating thickness to a thickness that is one-tenth of the coating thickness toward the surface side and a region from the center of the coating thickness to a thickness that is one-tenth of the coating thickness toward the plating layer side is 5 to 50% by area.

## CITATION LIST

### PATENT LITERATURE

Patent Literature 1: Japanese Patent Application Publication No. 2002-030460
Patent Literature 2: International Application Publication No. WO2007/123276

Patent Literature 3: International Application Publication No. WO2007/069783
Patent Literature 4: International Application Publication No. WO2009/004684
Patent Literature 5: Japanese Patent Application Publication No. 2003-055777
Patent Literature 6: Japanese Patent Application Publication No. 2005-097733
Patent Literature 7: International Application Publication No. WO2017/155028

SUMMARY OF INVENTION

TECHNICAL PROBLEM

In the surface-treated steel sheet disclosed in Patent Literature 7, sufficient corrosion resistance, sufficient adhesiveness to an adhesive, and sufficient blackening resistance are obtained.

In this connection, in a case where dew formation occurs on the surface of a surface-treated steel sheet, a phenomenon may occur in which a portion where the dew is formed changes color. In the present description, such a phenomenon is referred to as "dew formation discoloration". Dew formation discoloration has no particular effect on the mechanical properties of a surface-treated steel sheet. However, because a pattern is formed at a portion where dew is formed, the external appearance of the surface-treated steel sheet deteriorates. Therefore, it is preferable for it to be difficult for dew formation discoloration to occur in surface-treated steel sheets. In other words, there is also a need for surface-treated steel sheets to have excellent dew formation discoloration resistance.

An objective of the present disclosure is to provide a surface-treated steel sheet in which excellent corrosion resistance, excellent adhesiveness to an adhesive, and excellent blackening resistance are obtained, and in addition, excellent dew formation discoloration resistance is obtained.

SOLUTION TO PROBLEM

A surface-treated steel sheet of the present disclosure includes:

a base steel sheet,
a plating layer formed on the base steel sheet, and
a chemical conversion coating formed on the plating layer,
wherein:

a chemical composition of the plating layer consists of, in mass%,
Al: more than 5.0 to less than 25.0%,
Mg: more than 3.0 to less than 12.5%,
Sn: 0 to 3.00%,
Bi: 0 to 5.00%,
In: 0 to 2.00%,
Ca: 0 to 3.00%,
Y: 0 to 3.00%,
La: 0 to 3.00%,
Ce: 0 to 3.00%,
Si: 0 to 2.50%,
Cr: 0 to 0.5%,
Ti: 0 to 0.5%,
Ni: 0 to 0.5%,
Co: 0 to 0.5%,
V: 0 to 0.5%,
Nb: 0 to 0.5%,
Cu: 0 to 0.5%,
Mn: 0 to 0.5%,
Fe: 0 to 5.0%,
Sr: 0 to 0.5%,
Sb: 0 to 0.5%,
Pb: 0 to 0.5%, and
B: 0 to 0.5%,
with the balance being Zn in an amount of 65.0% or more and impurities;
the chemical conversion coating contains:

Zr, V, P, and Co, and
acrylic resin;
a coating mass of the chemical conversion coating is 300 to 1000 mg/m$^2$;
a V mass [V] mg/m$^2$ in the chemical conversion coating, and a P mass [P] mg/m$^2$ in the chemical conversion coating satisfy Formula (1); and
a content of Mg [Mg]b mass% in the chemical composition of the plating layer and the V mass [V] mg/m$^2$ satisfy Formula (2).

$$0.60 \leq [V]/[P] \leq 2.80 \quad (1)$$

$$0 < [V]/[Mg]b \leq 20.00 \quad (2)$$

ADVANTAGEOUS EFFECTS OF INVENTION

According to the surface-treated steel sheet of the present disclosure, excellent corrosion resistance, excellent adhesiveness to an adhesive, and excellent blackening resistance are obtained, and in addition, excellent dew formation discoloration resistance is obtained.

BRIEF DESCRIPTION OF DRAWINGS

[FIG. 1] FIG. 1 is a graph of glow emission spectroscopic spectrums (GDS spectrums) of elements in a chemical conversion coating and a plating layer in a surface-treated steel sheet.
[FIG. 2] FIG. 2 is a cross-sectional view perpendicular to a rolling direction of a surface-treated steel sheet of the present embodiment.
[FIG. 3] FIG. 3 is a side view of a lap shear test piece used in an adhesiveness evaluation test in Examples.

DESCRIPTION OF EMBODIMENT

The present inventors conducted research and studies in order to solve the above problem. As a result, the present inventors obtained the following finding.
In a base steel sheet on which a plating layer that contains Zn as a main component and that also contains, in percent by mass, Al in an amount of more than 5.0 to less than 25.0% and Mg in an amount of more than 3.0 to less than 12.5% is formed, if a chemical conversion coating formed on the plating layer contains Zr, V, P, and Co and acrylic resin, there is a possibility that excellent corrosion resistance will be obtained.
Therefore, the present inventors conducted studies to investigate corrosion resistance, adhesiveness to an adhesive, and blackening resistance in a surface-treated steel sheet composed as described above. As a result, the present inventors further obtained the following finding.
Adhesiveness to an adhesive depends on the coating mass of the chemical conversion coating having the aforementioned composition. Specifically, when the coating mass of the chemical conversion coating is 300 to 1000 mg/m$^2$, excellent adhesiveness is obtained in the surface-treated steel sheet.
In addition, here, the V mass in the chemical conversion coating is defined as [V] (mg/m$^2$), and the P mass in the chemical conversion coating is defined as [P] (mg/m$^2$). In this case, the corrosion resistance and the blackening resistance are influenced by [V]/[P]. Specifically, if [V]/[P] is less than 0.60, sufficient blackening resistance will not be obtained. Although this mechanism has not been clarified, it is considered that if the P mass [P] is too large, an oxidation reaction of the plating, which is the cause of blackening, will be promoted. On the other hand, if the value of [V]/[P] is more than 2.80, sufficient corrosion resistance will not be obtained. This is because, if the P mass [P] in the chemical conversion coating is too small relatively with respect to the V mass [V], the corrosion inhibiting effect of a passivation coating formed by P will become small. If [V]/[P] satisfies Formula (1), excellent corrosion resistance and excellent blackening resistance will be obtained.

$$0.60 \leq [V]/[P] \leq 2.80 \quad (1)$$

However, even when surface-treated steel sheets were composed as described above, there were still cases where sufficient dew formation discoloration resistance was not obtained. Therefore, the present inventors conducted further studies. As a result, the present inventors newly obtained the following finding.

Dew formation discoloration resistance is influenced by the V mass [V] ($mg/m^2$) in the chemical conversion coating, and a content of Mg [Mg]b (mass%) in the chemical composition of the plating layer in percent by mass. Specifically, if the V mass [V] ($mg/m^2$) in the chemical conversion coating and the content of Mg [Mg]b (mass%) in the plating layer satisfy Formula (2), sufficient dew formation discoloration resistance will be obtained.

$$0 < [V]/[Mg]b \leq 20.00 \quad (2)$$

This point is described hereunder.

The present inventors used an electron probe micro-analyzer (EPMA) to measure, on the surface of surface-treated steel sheets, the concentrations of the principal elements in regions in which dew formation discoloration occurred, and in regions in which dew formation discoloration did not occur. As a result, it was found that in regions where dew formation discoloration occurred, the value of [V]/[Mg]b was more than 20.00. On the other hand, in regions where dew formation discoloration did not occur, the value of [V]/[Mg]b was in the range of more than 0 to 20.00. Therefore, in a case where the aforementioned chemical conversion coating containing V is formed on the aforementioned plating layer in which the content of Mg is more than 3.0%, if [V]/[Mg]b is 20.00 or less, the occurrence of dew formation discoloration can be suppressed and sufficient dew formation discoloration resistance is obtained.

The surface-treated steel sheet of the present embodiment was completed based on the technical idea described above, and is as follows.

A surface-treated steel sheet according to a first configuration includes:

a base steel sheet,
a plating layer formed on the base steel sheet, and
a chemical conversion coating formed on the plating layer,
wherein:

a chemical composition of the plating layer consists of, in mass%,
Al: more than 5.0 to less than 25.0%,
Mg: more than 3.0 to less than 12.5%,
Sn: 0 to 3.00%,
Bi: 0 to 5.00%,
In: 0 to 2.00%,
Ca: 0 to 3.00%,
Y: 0 to 3.00%,
La: 0 to 3.00%,
Ce: 0 to 3.00%,
Si: 0 to 2.50%,
Cr: 0 to 0.5%,
Ti: 0 to 0.5%,
Ni: 0 to 0.5%,
Co: 0 to 0.5%,
V: 0 to 0.5%,
Nb: 0 to 0.5%,
Cu: 0 to 0.5%,
Mn: 0 to 0.5%,
Fe: 0 to 5.0%,
Sr: 0 to 0.5%,
Sb: 0 to 0.5%,
Pb: 0 to 0.5%, and
B: 0 to 0.5%,
with the balance being Zn in an amount of 65.0% or more and impurities;
the chemical conversion coating contains:

Zr, V, P, and Co, and
acrylic resin;
a coating mass of the chemical conversion coating is 300 to 1000 $mg/m^2$;
a V mass [V] $mg/m^2$ in the chemical conversion coating, and a P mass [P] $mg/m^2$ in the chemical conversion coating satisfy Formula (1); and

a content of Mg [Mg]b mass% in the chemical composition of the plating layer and the V mass [V] mg/m$^2$ satisfy Formula (2).

$$0.60 \leq [V]/[P] \leq 2.80 \quad (1)$$

$$0 < [V]/[Mg]b \leq 20.00 \quad (2)$$

A surface-treated steel sheet according to a second configuration is in accordance with the surface-treated steel sheet according to the first configuration, wherein, in addition,

an Mg concentration difference $\Delta$[Mg] mass% and the V mass [V] mg/m$^2$ satisfy Formula (3), the Mg concentration difference $\Delta$[Mg] mass% being a difference between an Mg concentration [Mg]s mass% in an outer layer of the plating layer obtained by elementary analysis in a depth direction of the plating layer using glow discharge optical emission spectroscopy and the content of Mg [Mg]b mass% in the chemical composition of the plating layer.

$$\Delta[Mg] \times [V] \leq 200 \quad (3)$$

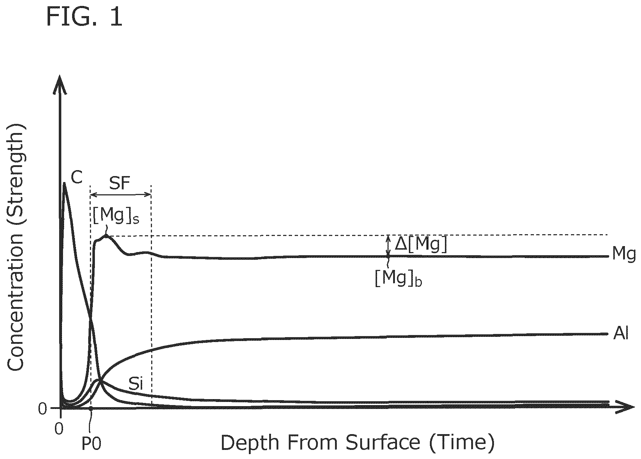

FIG. 1 is a graph of glow emission spectroscopic spectrums (GDS spectrums) of elements in a chemical conversion coating and a plating layer as obtained by glow discharge optical emission spectroscopy conducted in a sheet thickness direction from the surface of a chemical conversion coating of the surface-treated steel sheet. The abscissa in FIG. 1 represents a depth (measurement time) from the surface. The ordinate represents a concentration (emission intensity) of each element.

In FIG. 1, the emission intensity of carbon (C) is high from the surface (position of 0 on the abscissa) of the surface-treated steel sheet to a predetermined depth. The region where the emission intensity of C is high indicates that the region in question is the region of the chemical conversion coating. On the other hand, the region where the emission intensities of Mg and Al are high indicates that the region in question is the region of the plating layer.

Referring to FIG. 1, in the surface-treated steel sheet satisfying Formula (1) and Formula (2), the present inventors focused on the fact that Mg is concentrated in an outer layer region of the plating layer that is in contact with the chemical conversion coating. Further, the present inventors considered that, in the surface-treated steel sheet satisfying Formula (1) and Formula (2), it may be possible to further suppress dew formation discoloration by a synergistic reaction between the concentrated amount of Mg in the outer layer of the plating layer and components in the chemical conversion coating. Therefore, the present inventors conducted further studies based on the above consideration. As a result, the following matter was revealed.

In the surface-treated steel sheet satisfying Formula (1) and Formula (2), Mg in the plating layer and V in the chemical conversion coating influence dew formation discoloration. As illustrated in FIG. 1, when an Mg concentration difference $\Delta$[Mg] that is a difference between an Mg concentration [Mg]s (mass%) in the outer layer of the plating layer and a content of Mg [Mg]b (mass%) in the chemical composition of the plating layer is made small, or the V mass [V] in the chemical conversion coating is kept to a small amount, dew formation discoloration is further suppressed by a synergistic effect achieved between Mg and V.

Based on the above finding, the present inventors also investigated the relation between the Mg concentration difference $\Delta$[Mg] in the plating layer, the V mass [V] in the chemical conversion coating, and dew formation discoloration. As a result, the present inventors, in addition, discovered the following finding.

If the Mg concentration difference $\Delta$[Mg] (mass%) in the plating layer and the V mass [V] (mg/m$^2$) in the chemical conversion coating satisfy Formula (3), excellent corrosion resistance, excellent adhesiveness to an adhesive, and excellent blackening resistance will be obtained in the surface-treated steel sheet, and furthermore, excellent dew formation discoloration resistance will also be obtained.

$$\Delta[Mg] \times [V] \leq 200 \quad (3)$$

A surface-treated steel sheet according to a third configuration is in accordance with the surface-treated steel sheet of the first configuration or the second configuration, wherein:

the chemical composition of the plating layer contains, in mass%, one or more kinds of element selected from a group consisting of:

Sn: 0.01 to 3.00%,
Bi: 0.01 to 5.00%,

In: 0.01 to 2.00%,
Ca: 0.01 to 3.00%,
Y: 0.01 to 3.00%,
La: 0.01 to 3.00%,
Ce: 0.01 to 3.00%,
Si: 0.01 to 2.50%,
Cr: 0.1 to 0.5%,
Ti: 0.1 to 0.5%,
Ni: 0.1 to 0.5%,
Co: 0.1 to 0.5%,
V: 0.1 to 0.5%,
Nb: 0.1 to 0.5%,
Cu: 0.1 to 0.5%,
Mn: 0.1 to 0.5%,
Fe: 0.1 to 5.0%,
Sr: 0.1 to 0.5%,
Sb: 0.1 to 0.5%,
Pb: 0.1 to 0.5%, and
B: 0.1 to 0.5%.

Hereunder, the surface-treated steel sheet of the present embodiment is described while referring to the accompanying drawings. In the drawings, substantially the same components are denoted by the same reference numerals, and a description of such same components is omitted herein. The symbol "%" used when describing the content of each element means "percent by mass" unless otherwise specified.

[Structure of surface-treated steel sheet]

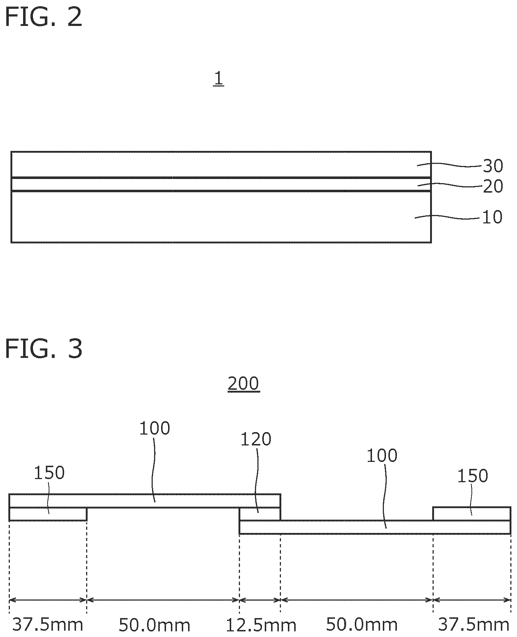

FIG. 2 is a cross-sectional view perpendicular to a rolling direction of the surface-treated steel sheet of the present embodiment. Referring to FIG. 2, a surface-treated steel sheet 1 includes a base steel sheet 10, a plating layer 20, and a chemical conversion coating 30. The plating layer 20 is formed on a surface of the base steel sheet 10. The chemical conversion coating 30 is formed on the surface of the plating layer 20. The plating layer 20 may be formed on a surface on one side of the base steel sheet 10, or the plating layer 20 may be formed on the surfaces on both sides of the base steel sheet 10. In a case where the plating layer 20 is formed on the surfaces on both sides of the base steel sheet 10, the chemical conversion coating 30 may be formed only on the plating layer 20 on one side, or may be formed on the plating layer 20 on both sides.

[Regarding base steel sheet 10]

The base steel sheet 10 is not particularly limited. For example, the base steel sheet 10 may be a steel sheet whose microstructure is mainly composed of ferrite. The base steel sheet 10 may be a steel sheet whose microstructure is mainly composed of ferrite and pearlite. The base steel sheet 10 may be a steel sheet whose microstructure is mainly composed of ferrite and one or more kinds among martensite and bainite. The type of base steel sheet 10 does not particularly influence the advantageous effects of the surface-treated steel sheet 1 of the present embodiment. Accordingly, the base steel sheet 10 is not particularly limited.

[Regarding plating layer 20]

The plating layer 20 is formed on the surface (on one side or on both sides) of the base steel sheet 10. The plating layer 20 consists of, in mass%, Al: more than 5.0 to less than 25.0%, Mg: more than 3.0 to less than 12.5%, and Zn: 65.0% or more. Each element is described hereunder.

Al: more than 5.0 to less than 25.0%

Aluminum (Al) is an easily oxidized element, and increases the corrosion resistance of the plating layer 20 by sacrificial protection. If the content of Al is more than 5.0 to less than 25.0%, the aforementioned advantageous effect will be sufficiently obtained.
A preferable lower limit of the content of Al is 5.1%, more preferably is 7.5%, further preferably is 10.0%, and further preferably is 12.0%.

A preferable upper limit of the content of Al is 24.9%, more preferably is 24.5%, further preferably is 24.0%, further preferably is 22.0%, and further preferably is 20.0%.

A preferable range of the content of Al is, for example, 5.1 to 24.9%, more preferably is 7.5 to 24.5%, further preferably is 10.0 to 24.0%, further preferably is 12.0 to 22.0%, and further preferably is 12.0 to 20.0%.

Mg: more than 3.0 to less than 12.5%

Magnesium (Mg) is an easily oxidized element, and increases the corrosion resistance of the plating layer 20 by sacrificial protection. If the content of Mg is more than 3.0 to less than 12.5%, the aforementioned advantageous effect will be sufficiently obtained.

A preferable lower limit of the content of Mg is 3.1%, more preferably is 3.5%, further preferably is 4.0%, further preferably is 4.5%, further preferably is 5.0%, and further preferably is 5.5%.

A preferable upper limit of the content of Mg is 12.4%, more preferably is 12.0%, further preferably is 11.0%, and further preferably is 10.0%.

A preferable range of the content of Mg is, for example, 3.1 to 12.4%, more preferably is 3.5 to 12.0%, further preferably is 4.0 to 11.0%, further preferably is 4.5 to 10.0%, further preferably is 5.0 to 10.0%, and further preferably is 5.5 to 10.0%.

The balance of the chemical composition of the plating layer 20 of the present embodiment is Zn in an amount of 65.0% or more and impurities.

As mentioned above, the plating layer 20 contains Zn as a main component. Specifically, the plating layer 20 contains Zn in an amount of, in percent by mass, 65.0% or more. When the content of Zn in the plating layer 20 is, in percent by mass, 65.0% or more, sufficient corrosion resistance is obtained.

A preferable lower limit of the content of Zn is 67.5%, and more preferably is 70.0%.

A preferable upper limit of the content of Zn is less than 92.0%, more preferably is 90.0%, further preferably is 85.0%, and further preferably is 80.0%.

A preferable range of the content of Zn is, for example, 67.5 to less than 92.0%, more preferably is 70.0 to 90.0%, further preferably is 70.0 to 85.0%, and further preferably is 70.0 to 80.0%.

The term "impurities" mentioned above means substances which are mixed in from the raw material of the plating layer 20 or from the production environment or the like when industrially producing the surface-treated steel sheet 1, and which are permitted within a range that does not adversely affect the plating layer 20 according to the present embodiment.

[Regarding optional elements]

The chemical composition of the plating layer 20 may further contain one or more kinds of element selected from the following first group to sixth group in lieu of a part of Zn.

[First group (Sn group)]

Sn: 0 to 3.00%,
Bi: 0 to 5.00%, and
In: 0 to 2.00%

[Second group (Ca group)]

Ca: 0 to 3.00%,
Y: 0 to 3.00%,
La: 0 to 3.00%, and
Ce: 0 to 3.00%

[Third group]

Si: 0 to 2.50%

[Fourth group (Cr group)]

Cr: 0 to 0.5%,
Ti: 0 to 0.5%,
Ni: 0 to 0.5%,
Co: 0 to 0.5%,
V: 0 to 0.5%,
Nb: 0 to 0.5%,
Cu: 0 to 0.5%, and
Mn: 0 to 0.5%

[Fifth group]

Fe: 0 to 5.0%

[Sixth group (Sr group)]

Sr: 0 to 0.5%,
Sb: 0 to 0.5%,
Pb: 0 to 0.5%, and
B: 0 to 0.5%

Hereunder, the first group to sixth group are described.

[First group (Sn, Bi, and In)]

The chemical composition of the plating layer 20 may further contain one or more kinds of element selected from the group consisting of tin (Sn), bismuth (Bi), and indium (In) in lieu of a part of Zn. These elements are optional elements, and do not have to be contained. That is, the content of Sn, the content of Bi, and the content of In may each be 0%.

When contained, these elements form intermetallic compounds with Mg. As a result, the corrosion resistance of the surface-treated steel sheet increases. If even a small amount of any one or more kinds among Sn, Bi, and In is contained, the aforementioned advantageous effect will be obtained to a certain extent.

However, if the content of these elements is too high, the viscosity of the plating bath will increase even if the contents of other elements are within the range of the present embodiment. In such a case, the external appearance quality of the surface-treated steel sheet 1 will decrease.

Therefore, the content of Sn is 0 to 3.00%, the content of Bi is 0 to 5.00%, and the content of In is 0 to 2.00%.

A preferable lower limit of the content of Sn is more than 0%, more preferably is 0.01%, and further preferably is 0.05%. A preferable upper limit of the content of Sn is 2.70%, more preferably is 2.50%, further preferably is 2.00%, and further preferably is 1.70%.

A preferable range of the content of Sn is, for example, more than 0 to 2.70%, more preferably is 0.01 to 2.50%, further preferably is 0.05 to 2.00%, and further preferably is 0.05 to 1.70%.

A preferable lower limit of the content of Bi is more than 0%, more preferably is 0.01%, and further preferably is 0.05%. A preferable upper limit of the content of Bi is 4.80%, more preferably is 4.50%, and further preferably is 4.00%.

A preferable range of the content of Bi is, for example, more than 0 to 4.80%, more preferably is 0.01 to 4.50%, and further preferably is 0.05 to 4.00%.

A preferable lower limit of the content of In is more than 0%, more preferably is 0.01%, and further preferably is 0.05%. A preferable upper limit of the content of In is 1.90%, more preferably is 1.80%, and further preferably is 1.70%.

A preferable range of the content of In is, for example, more than 0 to 1.90%, more preferably is 0.01 to 1.80%, and further preferably is 0.05 to 1.70%.

[Second group (Ca, Y, La, and Ce)]

The chemical composition of the plating layer 20 may further contain one or more kinds of element selected from the group consisting of calcium (Ca), yttrium (Y), lanthanum (La), and cerium (Ce) in lieu of a part of Zn. Each of these elements is an optional element, and does not have to be contained. That is, the content of these elements may be 0%.

When contained, these elements form intermetallic compounds with Al and Zn in the plating layer 20. As a result, the corrosion resistance of the surface-treated steel sheet 1 increases. If even a small amount of these elements is contained, the aforementioned advantageous effect will be obtained to a certain extent.

However, if the content of these elements is too high, oxidized dross will increase even if the contents of other elements are within the range of the present embodiment. In such a case, the external appearance quality of the surface-treated steel sheet 1 will decrease.

Therefore, the content of Ca is 0 to 3.00%, the content of Y is 0 to 3.00%, the content of La is 0 to 3.00%, and the content of Ce is 0 to 3.00%.

A preferable lower limit of the content of each of the elements Ca, Y, La, and Ce is more than 0%, more preferably is 0.01%, further preferably is 0.05%, and further preferably is 0.10%.

A preferable upper limit of the content of each of the elements Ca, Y, La, and Ce is 2.80%, more preferably is 2.50%, and further preferably is 2.00%.

A preferable range of the content of each of the elements Ca, Y, La, and Ce is, for example, more than 0 to 2.80%, more preferably is 0.01 to 2.50%, further preferably is 0.05 to 2.00%, and further preferably is 0.10 to 2.00%.

[Third group (Si)]

The chemical composition of the plating layer 20 may further contain silicon (Si) in lieu of a part of Zn. Si is an optional element and does not have to be contained. That is, the content of Si may be 0%.

When contained, Si increases the corrosion resistance of the surface-treated steel sheet 1. If even a small amount of Si is contained, the aforementioned advantageous effect will be obtained to a certain extent.

However, if the content of Si is too high, the viscosity of the plating bath will increase even if the contents of other elements are within the range of the present embodiment. In such a case, the external appearance quality of the surface-treated steel sheet 1 will decrease.

Therefore, the content of Si is 0 to 2.50%.

A preferable lower limit of the content of Si is more than 0%, more preferably is 0.01%, further preferably is 0.05%, and further preferably is 0.10%.

A preferable upper limit of the content of Si is 2.00%, more preferably is 1.50%, further preferably is 1.00%, and further preferably is 0.50%.

A preferable range of the content of Si is, for example, more than 0 to 2.00%, more preferably is 0.01 to 1.50%, further preferably is 0.05 to 1.00%, and further preferably is 0.10 to 0.50%.

[Fourth group (Cr, Ti, Ni, Co, V, Nb, Cu, and Mn)]

The chemical composition of the plating layer 20 may further contain one or more kinds of element selected from the group consisting of chromium (Cr), titanium (Ti), nickel (Ni), cobalt (Co), vanadium (V), niobium (Nb), copper (Cu), and manganese (Mn) in lieu of a part of Zn. Each of these elements is an optional element, and does not have to be contained. That is, the content of these elements may be 0%.

When contained, these elements improve the external appearance quality of the surface-treated steel sheet 1. In addition, these elements form intermetallic compounds with Al in the plating layer 20. As a result, the corrosion resistance of the surface-treated steel sheet 1 increases. If even a small amount of these elements is contained, the aforementioned advantageous effects will be obtained to a certain extent.

However, if the content of these elements is too high, the viscosity of the plating bath will increase even if the contents of other elements are within the range of the present embodiment. In such a case, the external appearance quality of the surface-treated steel sheet 1 will decrease.

Therefore, the content of Cr is 0 to 0.5%, the content of Ti is 0 to 0.5%, the content of Ni is 0 to 0.5%, the content of Co is 0 to 0.5%, the content of V is 0 to 0.5%, the content of Nb is 0 to 0.5%, the content of Cu is 0 to 0.5%, and the content of Mn is 0 to 0.5%.

A preferable lower limit of the content of each of the elements Cr, Ti, Ni, Co, V, Nb, Cu, and Mn is more than 0%, and more preferably is 0.1%.

A preferable upper limit of the content of each of the elements Cr, Ti, Ni, Co, V, Nb, Cu, and Mn is less than 0.5%, and more preferably is 0.4%.

A preferable range of the content of each of the elements Cr, Ti, Ni, Co, V, Nb, Cu, and Mn is, for example, more than 0 to less than 0.5%, and more preferably is 0.1 to 0.4%.

[Fifth group (Fe)]

The chemical composition of the plating layer 20 may further contain Fe in lieu of a part of Zn. That is, the content of Fe may be 0%.

When contained, Fe increases the hardness of the plating layer 20, and thereby increases the workability of the surface-treated steel sheet 1. If even a small amount of Fe is contained, the aforementioned advantageous effect will be obtained to a certain extent.

However, if the content of Fe is too high, the hardness of the plating layer will be too high even if the contents of other elements are within the range of the present embodiment. In such a case, the workability of the surface-treated steel sheet 1 will, on the contrary, decrease.

Therefore, the content of Fe is 0 to 5.0%.

A preferable lower limit of the content of Fe is more than 0%, more preferably is 0.1%, and further preferably is 0.5%.

A preferable upper limit of the content of Fe is 4.5%, more preferably is 4.0%, and further preferably is 3.5%.

A preferable range of the content of Fe is, for example, more than 0 to 4.5%, more preferably is 0.1 to 4.0%, and further preferably is 0.5 to 3.5%.

[Sixth group (Sr, Sb, Pb, and B)]

The chemical composition of the plating layer 20 may further contain one or more kinds of element selected from the group consisting of strontium (Sr), antimony (Sb), lead (Pb), and boron (B) in lieu of a part of Zn. Each of these elements is an optional element, and does not have to be contained. That is, the content of these elements may be 0%.

When contained, these elements increase the metallic luster of the plating layer 20, and thereby enhance the external appearance quality of the surface-treated steel sheet 1. If even a small amount of these elements is contained, the aforementioned advantageous effect will be obtained to a certain extent.

However, if the content of these elements is too high, oxidized dross will increase even if the contents of other elements are within the range of the present embodiment. In such a case, the external appearance quality of the surface-treated steel sheet 1 will decrease.

Therefore, the content of Sr is 0 to 0.5%, the content of Sb is 0 to 0.5%, the content of Pb is 0 to 0.5%, and the content of B is 0 to 0.5%.

A preferable lower limit of the content of each of the elements Sr, Sb, Pb, and B is more than 0%, and more preferably is 0.1%.

A preferable upper limit of the content of each of the elements Sr, Sb, Pb, and B is less than 0.5%, and more preferably is 0.4%.

A preferable range of the content of each of the elements Sr, Sb, Pb, and B is, for example, more than 0 to less than 0.5%, and more preferably is 0.1 to 0.4%.

[Preferable coating mass of plating layer 20]

The coating mass ($mg/m^2$) of the plating layer 20 is not particularly limited. A preferable coating mass of the plating layer 20 is, for example, 20 to 500 $mg/m^2$. A more preferable lower limit of the coating mass of the plating layer 20 is 30 $mg/m^2$, further preferably is 40 $mg/m^2$, and further preferably is 50 $mg/m^2$. A preferable upper limit of the coating mass of the plating layer 20 is 400 $mg/m^2$, more preferably is 300 $mg/m^2$, and further preferably is 200 $mg/m^2$. A preferable range of the coating mass of the plating layer 20 is, for example, 30 to 400 $mg/m^2$, more preferably is 40 to 300 $mg/m^2$, and further preferably is 50 to 200 $mg/m^2$.

[Method for measuring chemical composition and coating mass of plating layer 20]

The content (mass%) of each element in the chemical composition of the plating layer 20, and the coating mass ($mg/m^2$) of the plating layer 20 can be measured by the following method.

First, a thickness of the plating layer 20 and a thickness of the chemical conversion coating 30 of the surface-treated steel sheet 1 are measured.

Specifically, a test specimen is taken, which includes a cross section perpendicular to the surface of the surface-treated steel sheet 1 and in which the cross section is adopted as an observation surface. The observation surface is subjected to mirror polishing. On the observation surface after mirror polishing, a region including the chemical conversion coating 30, the plating layer 20, and at least the outer layer portion of the base steel sheet 10 is observed using a scanning electron microscope (SEM). The magnification is to be set to 400×.

In the observation visual field, the chemical conversion coating 30 and the plating layer 20 can be clearly distinguished by contrast. The thickness ($\mu$m) of the plating layer 20 and the thickness ($\mu$m) of the chemical conversion coating 30 are determined at an arbitrary five locations in the observation field. The arithmetic average value of the determined thicknesses of the plating layer 20 at the five locations is taken as the thickness ($\mu$m) of the plating layer 20. Similarly, an arithmetic average value of the determined thicknesses of the chemical conversion coating 30 at the five locations is taken as the thickness ($\mu$m) of the chemical conversion coating 30.

Next, a plurality of test specimens that each include the chemical conversion coating 30, the plating layer 20, and the base steel sheet 10 are taken from the surface-treated steel sheet 1. Hereunder, these test specimens are referred to as "basic test specimens". The thickness of each basic test specimen is made the same as the thickness of the surface-treated steel sheet 1. In one of the basic test specimens, the plating layer 20 and the chemical conversion coating 30 are completely dissolved with hexamethylenetetramine hydrochloric acid. The solution is then subjected to elementary analysis by ICP-MS (Inductively Coupled Plasma Mass Spectrometry). By this means, the total coating mass (mg/m$^2$) of the plating layer 20 and the chemical conversion coating 30, and the mass (mg/m$^2$) of each element contained in the plating layer 20 and the chemical conversion coating 30 are determined.

Next, another basic test specimen is used to prepare a test specimen for plating layer analysis. Specifically, the chemical conversion coating 30 of another basic test specimen is removed by polishing. At such time, polishing is performed to remove down to "the thickness of the chemical conversion coating 30 + (the thickness of the plating layer 20 $\times$ 0.05) $\mu$m depth" from the surface of the basic test specimen. A test specimen for plating layer analysis that is composed of the plating layer 20 and the base steel sheet 10 is thus prepared by the above method.

The plating layer 20 of the test specimen for plating layer analysis is completely dissolved with hexamethylenetetramine hydrochloric acid. The solution is subjected to elementary analysis by ICP-MS. By this means, a provisional coating mass (mg/m$^2$) of the plating layer 20, and a provisional mass (mg/m$^2$) of each element contained in the plating layer 20 are determined.

Here, a thickness of the plating layer 20 of the test specimen for plating layer analysis corresponds to 0.95 times the thickness of the plating layer 20 of the surface-treated steel sheet 1. Therefore, a value obtained by multiplying the obtained provisional coating mass (mg/m$^2$) of the plating layer 20 by 1/0.95 is taken as the coating mass (mg/m$^2$) of the plating layer 20.

Further, a value obtained by multiplying the provisional mass (mg/m$^2$) of each element by 1/0.95 is taken as the mass (mg/m$^2$) of the corresponding element in the plating layer 20.

The content (mass%) of each element in the plating layer 20 is determined based on the coating mass (mg/m$^2$) of the plating layer 20 and the mass (mg/m$^2$) of each element in the plating layer 20.

[Regarding chemical conversion coating 30]

The chemical conversion coating 30 is formed on the surface of the plating layer 20. The chemical conversion coating 30 contains Zr, V, P, and Co and acrylic resin.

[Regarding Zr, V, P, and Co]

Zirconium (Zr), vanadium (V), phosphorus (P), and cobalt (Co) each function as a corrosion inhibitor in the surface-treated steel sheet 1, and enhance the corrosion resistance of the surface-treated steel sheet 1. Corrosive environments in which Zr, V, P, and Co effectively exhibit a function as a corrosion inhibitor differ for each of Zr, V, P, and Co. Therefore, Zr, V, P, and Co are contained as corrosion inhibitors. By this means, corrosion of the surface-treated steel sheet 1 can be suppressed in various corrosive environments, and excellent corrosion resistance is obtained.

[Regarding Zr in chemical conversion coating 30]

The Zr in the chemical conversion coating 30 forms a crosslinked structure with the acrylic resin. Therefore, the chemical conversion coating 30 has excellent barrier properties. As a result, excellent corrosion resistance is obtained in the surface-treated steel sheet 1. In addition, it is considered that Zr also forms a Zr-O-M bond (M: metal element in the plating layer) with the surface of the plating layer 20. Therefore, Zr also increases the adhesion of the chemical conversion coating 30 to the plating layer 20.

Preferably, the Zr mass [Zr] in the chemical conversion coating 30 is 4.0 to 510.0 mg/m$^2$. If the Zr mass [Zr] per unit area (1 m$^2$) is 4.0 mg/m$^2$ or more, the adhesion achieved by bonding between the Zr in the chemical conversion coating 30 and the surface of the plating layer 20 will further increase. In addition, with regard to the chemical conversion coating 30, the barrier properties of the chemical conversion coating 30 obtained by the crosslinked structure formed by Zr and the acrylic resin will further increase, and the corrosion resistance will further increase. If the Zr mass [Zr] is 510.0 mg/m$^2$ or less, the occurrence of a crack in the chemical conversion coating 30 can be suppressed, and the corrosion resistance will further increase.

A more preferable lower limit of the Zr mass [Zr] is 50.0 mg/m$^2$, further preferably is 100.0 mg/m$^2$, and further preferably is 120.0 mg/m$^2$.

A more preferable upper limit of the Zr mass [Zr] is 500.0 mg/m$^2$, further preferably is 400.0 mg/m$^2$, and further preferably is 350.0 mg/m$^2$.

A preferable range of the Zr mass [Zr] is, for example, 50.0 to 500.0 mg/m$^2$, more preferably is 100.0 to 400.0 mg/m$^2$, and further preferably is 120.0 to 350.0 mg/m$^2$.

[Regarding V in chemical conversion coating 30]

The V in the chemical conversion coating 30 is eluted preferentially into the plating layer 20 in a corrosive environment. By this means, an increase in pH due to dissolution of the plating layer 20 is suppressed. As a result, the corrosion resistance of the surface-treated steel sheet 1 increases.

Preferably, the V mass [V] in the chemical conversion coating 30 is 5.0 to 110.0 mg/m$^2$. If the V mass [V] per unit area (1 m$^2$) is 5.0 mg/m$^2$ or more, the corrosion resistance of the surface-treated steel sheet 1 will further increase. If the V mass [V] is 110.0 mg/m$^2$ or less, the dew formation discoloration resistance of the surface-treated steel sheet 1 will further increase.

A preferable lower limit of the V mass [V] is 7.0 mg/m$^2$, more preferably is 10.0 mg/m$^2$, further preferably is 30.0 mg/m$^2$, and further preferably is 50.0 mg/m$^2$.

A preferable upper limit of the V mass [V] is 100.0 mg/m$^2$, more preferably is 90.0 mg/m$^2$, and further preferably is 80.0 mg/m$^2$.

A preferable range of the V mass [V] is, for example, 7.0 to 100.0 mg/m$^2$, more preferably is 10.0 to 90.0 mg/m$^2$, further preferably is 30.0 to 80.0 mg/m$^2$, and further preferably is 50.0 to 80.0 mg/m$^2$.

[Regarding P in chemical conversion coating 30]

The P in the chemical conversion coating 30 forms a passivation coating such as zinc phosphate on the surface of the plating layer 20. The corrosion resistance of the surface-treated steel sheet 1 is increased by the passivation coating. The passivation coating is produced by a reaction between metal ions generated by a portion of the plating layer 20 dissolving and P. The passivation coating is formed by applying an aqueous surface treating agent containing P which is a raw material for the chemical conversion coating 30 to the surface of the plating layer 20, and/or the plating layer 20 partially dissolving in a corrosive environment after formation of the chemical conversion coating 30.

Preferably, the P mass [P] in the chemical conversion coating 30 is 20.0 to 200.0 mg/m$^2$. If the P mass [P] per unit area (1 m$^2$) is 20.0 mg/m$^2$ or more, the corrosion resistance of the surface-treated steel sheet 1 will further increase. If the P mass [P] is 200.0 mg/m$^2$ or less, the blackening resistance of the surface-treated steel sheet 1 will further increase.

A preferable lower limit of the P mass [P] is 20.0 mg/m$^2$, more preferably is 30.0 mg/m$^2$, further preferably is 40.0 mg/m$^2$, and further preferably is 50.0 mg/m$^2$.

A preferable upper limit of the P mass [P] is 190.0 mg/m$^2$, more preferably is 180.0 mg/m$^2$, further preferably is 150.0 mg/m$^2$, and further preferably is 100.0 mg/m$^2$.

A preferable range of the P mass [P] is, for example, 20.0 to 190.0 mg/m$^2$, more preferably is 30.0 to 180.0 mg/m$^2$, further preferably is 40.0 to 150.0 mg/m$^2$, and further preferably is 50.0 to 100.0 mg/m$^2$.

[Regarding Co in chemical conversion coating 30]

The Co in the chemical conversion coating 30 improves the blackening resistance and corrosion resistance of the surface-treated steel sheet 1. Al and Mg in the plating layer 20 exhibit a sacrificial protection effect in a corrosive environment. In this case, Zn in the plating layer 20 is oxidized in an oxygen-deficient state and turns black. This phenomenon is referred to as a "blackening phenomenon". The blackening phenomenon tends to occur at more solvable portions of the plating layer 20. The Co in the chemical conversion coating 30 slows down the rate of oxidation (corrosion rate) of Zn in the plating layer 20. By this means, the blackening phenomenon is suppressed and the blackening resistance of the surface-treated steel sheet 1 increases.

Preferably, the Co mass [Co] in the chemical conversion coating 30 is 1.0 to 20.0 mg/m$^2$. If the Co mass [Co] per unit area (1 m$^2$) is 1.0 mg/m$^2$ or more, the blackening resistance of the surface-treated steel sheet 1 will increase further. If the Co mass [Co] is 20.0 mg/m$^2$ or less, the corrosion resistance of the surface-treated steel sheet 1 will increase further.

A preferable lower limit of the Co mass [Co] is 2.0 mg/m$^2$, more preferably is 3.0 mg/m$^2$, further preferably is 4.0 mg/m$^2$, and further preferably is 5.0 mg/m$^2$.

A preferable upper limit of the Co mass [Co] is 15.0 mg/m$^2$, more preferably is 12.0 mg/m$^2$, further preferably is 10.0 mg/m$^2$, and further preferably is 8.0 mg/m$^2$.

A preferable range of the Co mass [Co] is, for example, 2.0 to 15.0 mg/m$^2$, more preferably is 3.0 to 12.0 mg/m$^2$,

further preferably is 4.0 to 10.0 mg/m$^2$, and further preferably is 5.0 to 8.0 mg/m$^2$.

[Method for measuring Zr mass, V mass, P mass, and Co mass in chemical conversion coating 30]

The masses of Zr, V, P, and Co in the chemical conversion coating 30 can be measured by the following method.

The mass (mg/m$^2$) of each element contained in the plating layer 20 and the chemical conversion coating 30 is determined in accordance with the method described above in the section [Method for measuring chemical composition and coating mass of plating layer 20]. In addition, the mass (mg/m$^2$) of each element in the plating layer 20 is determined.

The Zr mass [Zr] (mg/m$^2$), the V mass [V] (mg/m$^2$), the P mass [P] (mg/m$^2$), and the Co mass [Co] (mg/m$^2$) contained in the chemical conversion coating 30 are then determined by subtracting the mass (mg/m$^2$) of each element in the plating layer 20 from the mass (mg/m$^2$) of each element contained in the plating layer 20 and the chemical conversion coating 30.

[Regarding acrylic resin]

As used in the present embodiment, the term "acrylic resin" refers to resin containing a polymer of a (meth)acrylic acid ester. Preferably, the acrylic resin is resin containing a polymer of a (meth)acrylic acid alkyl ester. The acrylic resin may be a polymer obtained by polymerizing only a (meth)acrylic acid alkyl ester, or may be a copolymer obtained by polymerizing a (meth)acrylic acid alkyl ester and other monomers. As used in the present description, the term "(meth)acrylic" means "acrylic" or "methacrylic".

The acrylic resin enhances the adhesiveness between the chemical conversion coating 30 and an adhesive. The acrylic resin also increases the corrosion resistance of the surface-treated steel sheet 1.

In a case where the acrylic resin is a copolymer of a (meth)acrylic acid alkyl ester and other monomers, the copolymer is, for example, a copolymer with styrene (b1), (meth)acrylic acid (b2), (meth)acrylic acid alkyl ester (b3), and acrylonitrile (b4).

Preferably, the acrylic resin is a copolymer containing styrene (b1) in an amount of 15 to 25% by mass, (meth) acrylic acid (b2) in an amount of 1 to 10% by mass, (meth)acrylic acid alkyl ester (b3) in an amount of 40 to 58% by mass, and acrylonitrile (b4) in an amount of 20 to 38% by mass. In a case where the acrylic resin is the aforementioned copolymer, the adhesiveness to the adhesive increases further. In addition, the corrosion resistance of the surface-treated steel sheet 1 increases further.

The styrene (b1) enhances the adhesiveness of the chemical conversion coating 30 to the adhesive. The styrene (b1) also increases the corrosion resistance of the surface-treated steel sheet 1. If the content of styrene (b1) with respect to the total mass of monomer components (in other words, when the acrylic resin is taken as 100% by mass) is 15% by mass or more, the aforementioned advantageous effects obtained by the styrene (b1) will increase further. If the content of styrene (b1) is 25% by mass or less, excessive hardening of the chemical conversion coating 30 can be suppressed. Therefore, the adhesiveness of the chemical conversion coating 30 to the adhesive will increase further, and the corrosion resistance of the surface-treated steel sheet 1 will increase further. Accordingly, a preferable range of the content of styrene (b1) is 15 to 25% by mass.

A more preferable lower limit of the content of styrene (b1) is 17% by mass. A more preferable upper limit of the content of styrene (b1) is 23% by mass. A more preferable range of the content of styrene (b1) is, for example, 17 to 23% by mass.

The (meth)acrylic acid (b2) enhances the adhesiveness between the chemical conversion coating 30 and the plating layer 20 and the adhesive, and increases the corrosion resistance of the surface-treated steel sheet 1. If the content of (meth)acrylic acid (b2) with respect to the total mass of monomer components (in other words, when the acrylic resin is taken as 100% by mass) is 1% by mass or more, the advantageous effects obtained by the (meth)acrylic acid (b2) will increase further. If the content of (meth)acrylic acid (b2) is 10% by mass or less, the water resistance of the chemical conversion coating 30 will increase, and consequently, the corrosion resistance will increase further. Accordingly, a preferable range of the content of (meth)acrylic acid (b2) is 1 to 10% by mass.

A more preferable lower limit of the content of (meth)acrylic acid (b2) is 2% by mass. A more preferable upper limit of the content of (meth)acrylic acid (b2) is 6% by mass. A more preferable range of the content of (meth)acrylic acid (b2) is, for example, 2 to 6% by mass.

The (meth)acrylic acid alkyl ester (b3) increases the corrosion resistance of the surface-treated steel sheet 1. If the content of (meth)acrylic acid alkyl ester (b3) with respect to the total mass of monomer components (in other words, when the acrylic resin is taken as 100% by mass) is 40% by mass or more, the corrosion resistance will increase further. Furthermore, if the content of (meth)acrylic acid alkyl ester (b3) is 58% by mass or less, the corrosion resistance will increase further. Accordingly, a preferable range of the content of (meth)acrylic acid alkyl ester (b3) is 40 to 58% by mass.

A more preferable lower limit of the content of (meth)acrylic acid alkyl ester (b3) is 43% by mass. A more preferable upper limit of the content of (meth)acrylic acid alkyl ester (b3) is 55% by mass. A more preferable range of the content of (meth)acrylic acid alkyl ester (b3) is, for example, 43 to 55% by mass.

The (meth)acrylic acid alkyl ester (b3) is, for example, one or more kinds selected from the group consisting of methyl (meth)acrylate, ethyl (meth)acrylate, butyl (meth)acrylate, 2-methylhexyl acrylate, and isomers of these compounds. Preferably, the (meth)acrylic acid alkyl ester (b3) is ethyl acrylate and/or butyl acrylate. In such a case, the corrosion resistance will increase further.

The acrylonitrile (b4) increases the adhesiveness between the chemical conversion coating 30 and the adhesive. If the content of acrylonitrile (b4) with respect to the total mass of monomer components (in other words, when the acrylic resin is taken as 100% by mass) is 20% by mass or more, the adhesiveness between the chemical conversion coating 30 and the adhesive will increase further. If the content of acrylonitrile (b4) is 38% by mass or less, the water resistance of the chemical conversion coating 30 will increase, and the corrosion resistance will increase further. Accordingly, a preferable range of the content of acrylonitrile (b4) is 20 to 38% by mass.

A more preferable lower limit of the content of acrylonitrile (b4) is 22% by mass. A more preferable upper limit of the content of acrylonitrile (b4) is 35% by mass. A more preferable range of the content of acrylonitrile (b4) is, for example, 22 to 35% by mass.

In a case where the acrylic resin is a copolymer, the acrylic resin may be a copolymer that contains styrene (b1), (meth)acrylic acid (b2), (meth)acrylic acid alkyl ester (b3), acrylonitrile (b4), and other vinyl group-containing monomers.

The other vinyl group-containing monomers are not particularly limited. The other vinyl group-containing monomers are, for example, one or more kinds selected from the group consisting of 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth) acrylate, ethoxy-diethylene glycol (meth)acrylate, 2-hydroxyethyl (meth)allyl ether, 3-hydroxypropyl (meth)allyl ether, 4-hydroxybutyl (meth)allyl ether, 2-dimethylaminoethyl acrylate, acrylamide, allyl alcohol, maleic acid, maleic anhydride, fumaric acid, crotonic acid, itaconic acid, citraconic acid, cinnamic acid, vinyltrimethoxysilane, vinyltriethoxysilane, allyl glycidyl ether, glycidyl (meth)acrylate, 2-(1-aziridinyl)ethyl acrylate, iminol methacrylate, acryloylmorpholine, vinyl formate, vinyl acetate, vinyl butyrate, vinyl acrylate, vinyltoluene, cinnamic acid nitrile, (meth)acryloxyethyl phosphate, and bis-(meth)acryloxyethyl phosphate.

Preferably, the other vinyl group-containing monomers are one kind or more selected from the group consisting of 2-hydroxyethyl acrylate, 4-hydroxybutyl acrylate, ethoxy-diethylene glycol acrylate, and acrylamide. In this case, the stability of the emulsion will increase.

As used in the present description, the term "(meth)acrylate" means "acrylate" or "methacrylate". The term "(meth)allyl ether" means "allyl ether" or "methallyl ether". The term "(meth)acrylo" means "acrylo" or "methacrylo".

[Method for measuring content of each component in acrylic resin in chemical conversion coating 30]

The content (mass%) of the respective components of styrene (b1), (meth)acrylic acid (b2), (meth)acrylic acid alkyl ester (b3), and acrylonitrile (b4) in the acrylic resin are measured as follows by an FT-IR reflection method, specifically, by Fourier transform infrared spectroscopy using reflection absorption spectroscopy (RAS technique).

A test specimen including the chemical conversion coating 30 (hereinafter, referred to as a "test specimen for resin component analysis") is taken from the surface-treated steel sheet 1. The thickness of the test specimen for resin component analysis is made the same as the thickness of the surface-treated steel sheet 1. A region of 40 mm × 40 mm of the test specimen for resin component analysis is subjected to measurement by Fourier transform infrared spectroscopy under a condition of 16 accumulations. At such time, the incident angle of infrared light onto the chemical conversion coating 30 is to be 70 to 75°. Based on the results obtained by the measurement, a graph of infrared absorption spectrums is created in which the abscissa represents wave number ($cm^{-1}$) and the ordinate represents transmittance (%).

In the graph of infrared absorption spectrums, the heights of the main peaks of styrene (b1), (meth)acrylic acid (b2), (meth)acrylic acid alkyl ester (b3), and acrylonitrile (b4) are determined.

Next, calibration curves of styrene (b1), (meth)acrylic acid (b2), (meth)acrylic acid alkyl ester (b3), and acrylonitrile (b4) are prepared. For example, in the case of styrene (b1), a plurality of chemical conversion coating samples having different contents (mass%) of styrene (b1) to each other in the chemical conversion coating 30 are prepared. The prepared chemical conversion coating samples are subjected to measurement by Fourier transform infrared spectroscopy under the same conditions as those described above, and the height of the main peak of styrene (b1) is determined for each sample. A calibration curve is created based on the obtained heights of the main peaks, and the content of styrene (b1) in the chemical conversion coating samples. Calibration curves are also prepared for (meth)acrylic acid (b2), (meth)acrylic acid alkyl ester (b3), and acrylonitrile (b4) by the same method as the method used in the case of styrene (b1).

The contents (mass%) of styrene (b1), (meth)acrylic acid (b2), (meth)acrylic acid alkyl ester (b3), and acrylonitrile (b4) are determined based on the heights of the main peaks of the respective components obtained using the test specimens for resin component analysis, and the calibration curves of the respective components.

Preferably, the glass transition temperature of the acrylic resin is -12 to 24°C. If the glass transition temperature is -12°C or more, the corrosion resistance of the chemical conversion coating 30 will increase further. If the glass transition temperature is 24°C or less, the adhesiveness to an adhesive will increase further. A preferable lower limit of the glass transition temperature of the acrylic resin is - 10°C. A preferable upper limit of the glass transition temperature of the acrylic resin is 20°C.

The glass transition temperature of the acrylic resin is calculated by the following formula:

$$1/Tg(K) = W_1/Tg_1 + W_2/Tg_2 + ... + W_n/Tg_n \quad (1)$$

where, in the formula, Tg is the glass transition temperature (K) of the acrylic resin (A), $W_1$, $W_2$, ..., $W_n$ (n is a natural number) are contents (mass%) of homopolymers of the respective monomers constituting the acrylic resin, and $Tg_1$, $Tg_2$, ..., $Tg_n$ (n is a natural number) are glass transition temperatures of the homopolymers of the respective monomers.

[Preferable content of acrylic resin in chemical conversion coating 30]

A preferable content of the acrylic resin in the chemical conversion coating 30 as a whole is 20.0 to 60.0% by mass. If the content of the acrylic resin is 20.0% by mass or more, the advantageous effect obtained by containing the acrylic resin will be more effectively obtained. If the content of the acrylic resin is 60.0% by mass or less, the corrosion resistance will be further increased by the synergistic effect obtained by containing Zr and the acrylic resin.

A more preferable lower limit of the content of the acrylic resin is 25.0% by mass, and further preferably is 30.0% by mass.

A more preferable upper limit of the content of the acrylic resin is 55.0% by mass, and further preferably is 50.0% by mass.

A more preferable range of the content of the acrylic resin is, for example, 25.0 to 55.0% by mass, and further preferably is 30.0 to 50.0% by mass.

[Method for confirming acrylic resin in chemical conversion coating 30 and method for measuring content of acrylic resin]

The presence or absence of the acrylic resin in the chemical conversion coating 30, and the content (mass%) of the acrylic resin contained in the chemical conversion coating 30 can be confirmed by the following methods.

A test specimen including the chemical conversion coating 30, the plating layer 20, and the base steel sheet 10 is taken from the surface-treated steel sheet 1. The thickness of the test specimen is to be the same as the thickness of the surface-treated steel sheet 1.

The test specimen is subjected to pyrolysis gas chromatography/mass spectrometry (GC-MS) analysis. Specifically, the test specimen is heated to 600°C using a GC-MS apparatus. At such time, the resin in the chemical conversion coating 30 is pyrolytically decomposed, and decomposition products are generated. The decomposition products are analyzed by GC-MS to determine the type and amount of the decomposition products. The presence or absence of the acrylic resin in the chemical conversion coating 30 can be confirmed based on the types of decomposition products.

The content (mass%) of the acrylic resin in the chemical conversion coating is determined based on the analyzed amount of the decomposition products and the mass of the chemical conversion coating 30. The mass of the chemical conversion coating 30 can be determined based on the total coating mass (mg/m$^2$) of the plating layer 20 and the chemical conversion coating 30, and the coating mass (mg/m$^2$) of the plating layer 20 obtained by the method described in [Method for measuring chemical composition and coating mass of plating layer 20].

[Regarding coating mass of chemical conversion coating 30]

The coating mass of the chemical conversion coating 30 is 300 to 1000 mg/m$^2$. If the coating mass of the chemical conversion coating 30 is less than 300 mg/m$^2$, the chemical conversion coating 30 that is formed will be too thin. In such a case, the adhesiveness will decrease and the corrosion resistance will also decrease. On the other hand, if the coating mass of the chemical conversion coating 30 is more than 1000 mg/m$^2$, the chemical conversion coating 30 that is formed will be too thick. In such a case, the adhesiveness will decrease.

If the coating mass of the chemical conversion coating 30 is 300 to 1000 mg/m$^2$, the thickness of the chemical conversion coating 30 will be appropriate. Therefore, sufficient adhesiveness will be obtained, and sufficient corrosion resistance will be obtained.

A preferable lower limit of the coating mass of the chemical conversion coating 30 is 350 mg/m$^2$, more preferably is 400 mg/m$^2$, and further preferably is 450 mg/m$^2$.

A preferable upper limit of the coating mass of the chemical conversion coating 30 is 950 mg/m$^2$, more preferably is 900 mg/m$^2$, and further preferably is 850 mg/m$^2$.

A preferable range of the coating mass of the chemical conversion coating 30 is 350 to 950 mg/m$^2$, more preferably is 400 to 900 mg/m$^2$, and further preferably is 450 to 850 mg/m$^2$.

[Method for measuring coating mass of chemical conversion coating 30]

The coating mass of the chemical conversion coating 30 can be determined by the following method.

The total coating mass (mg/m$^2$) of the plating layer 20 and the chemical conversion coating 30 is determined in accordance with the method described above in the section [Method for measuring chemical composition and coating mass of plating layer 20]. In addition, the coating mass (mg/m$^2$) of the plating layer 20 is determined.

The coating mass (mg/m$^2$) of the plating layer 20 is subtracted from the total coating mass (mg/m$^2$) of the plating layer 20 and the chemical conversion coating 30 to determine the coating mass (mg/m$^2$) of the chemical conversion coating 30.

[Regarding Formula (1)]

In the surface-treated steel sheet 1 of the present embodiment, the V mass [V] mg/m$^2$ in the chemical conversion coating 30 and the P mass [P] mg/m$^2$ in the chemical conversion coating 30 satisfy Formula (1).

$$0.60 \leq [V]/[P] \leq 2.80 \quad (1)$$

F1 is defined as follows.

$$F1 = [V]/[P]$$

If F1 is less than 0.60, the P mass [P] is excessively large relative to the V mass [V] in the chemical conversion coating 30. In such a case, the blackening resistance of the surface-treated steel sheet 1 will decrease. It is considered that if the P mass [P] is too large relative to the V mass [V], an oxidation reaction of the plating, which is the cause of blackening, will be promoted. On the other hand, if F1 is more than 2.80, sufficient corrosion resistance will not be obtained. This is because, if the P mass [P] is too small relative to the V mass [V], the corrosion inhibiting effect of the passivation coating formed by P will decrease. If F1 is 0.60 to 2.80, excellent blackening resistance and excellent corrosion resistance will be obtained.

A preferable lower limit of F1 is 0.65, more preferably is 0.70, and further preferably is 0.80.

A preferable upper limit of F1 is 2.40, more preferably is 2.00, and further preferably is 1.80.

A preferable range of F1 is, for example, 0.65 to 2.40, more preferably is 0.70 to 2.00, and further preferably is 0.80 to 1.80.

Note that, the V mass [V] (mg/m$^2$) and the P mass [P] (mg/m$^2$) in the chemical conversion coating 30 can be determined by the method described above in the section [Method for measuring Zr mass, V mass, P mass, and Co mass in chemical conversion coating 30].

[Regarding Formula (2)]

In the surface-treated steel sheet 1 of the present embodiment, in addition, when the content of Mg in the chemical composition of the plating layer 20 is defined as [Mg]b (mass%), the content of Mg [Mg]b (mass%) and the V mass [V] (mg/m$^2$) of the chemical conversion coating 30 satisfy Formula (2).

$$0 < [V]/[Mg]b \leq 20.00 \quad (2)$$

F2 is defined as follows.

$$F2 = [V]/[Mg]b$$

In a case where the content of Mg in the chemical composition of the plating layer 20 is more than 3.0% by mass, if the V mass [V] in the chemical conversion coating 30 is high relative to the content of Mg [Mg]b in the plating layer 20, dew formation discoloration will occur. Specifically, if F2 is more than 20.00, the V mass in the chemical conversion coating 30 will be excessively high relative to the Mg mass in the plating layer 20. In such a case, sufficient dew formation discoloration resistance will not be obtained. If F2 is within the range of more than 0 to 20.00, excellent dew formation discoloration resistance will be obtained in the surface-treated steel sheet 1.

A preferable lower limit of F2 is 5.00, more preferably is 6.00, and further preferably is 7.00.

A preferable upper limit of F2 is 19.00, more preferably is 18.00, and further preferably is 17.00.

A preferable range of F2 is, for example, 5.00 to 19.00, more preferably is 6.00 to 18.00, and further preferably is 7.00 to 17.00.

[Advantageous effects of surface-treated steel sheet 1]

In the surface-treated steel sheet 1 of the present embodiment, the plating layer 20 and the chemical conversion coating 30 have the chemical compositions described above, the coating mass of the chemical conversion coating 30 is 300 to 1000 mg/m$^2$, and in addition, Formula (1) and Formula (2) are satisfied. Therefore, in the surface-treated steel sheet 1 of the present embodiment, sufficient corrosion resistance, sufficient adhesiveness to an adhesive, and sufficient blackening resistance are obtained, and in addition, sufficient dew formation discoloration resistance is obtained.

[Preferable form of surface-treated steel sheet 1]

In the surface-treated steel sheet 1 of the present embodiment, a difference between an Mg concentration [Mg]s mass% in the outer layer of the plating layer 20 obtained by elementary analysis in the depth direction of the plating layer 20 using glow discharge optical emission spectroscopy and the content of Mg [Mg]b mass% in the chemical composition of the plating layer 20 is defined as an Mg concentration difference Δ[Mg] (mass%).

Preferably, in the surface-treated steel sheet 1 of the present embodiment, in addition, the Mg concentration difference Δ[Mg] (mass%) and the V mass [V] (mg/m$^2$) satisfy Formula (3).

$$\Delta[\text{Mg}] \times [\text{V}] \leq 200 \qquad (3)$$

F3 is defined as follows.

$$F3 = \Delta[\text{Mg}] \times [\text{V}]$$

The Mg concentration difference Δ[Mg] in the plating layer 20 and the V mass [V] in the chemical conversion coating 30 synergistically affect the dew formation discoloration resistance. If the Mg concentration difference Δ[Mg] is low and the V mass [V] is small, the dew formation discoloration resistance will be further increased by a synergistic effect between concentrated Mg in the outer layer of the plating layer 20 and the V concentration in the chemical conversion coating 30. Accordingly, F3 is an index of the dew formation discoloration resistance.

If F3 is 200 or less, a synergistic effect between concentrated Mg in the outer layer of the plating layer 20 and V in the chemical conversion coating 30 can be sufficiently suppressed. As a result, the dew formation discoloration resistance will markedly increase.

A more preferable upper limit of F3 is 180, further preferably is 160, further preferably is 150, further preferably is 140, further preferably is 130, and further preferably is 120.

The lower limit of F3 is not particularly limited. A preferable lower limit of F3 is, for example, 5, more preferably is 10, further preferably is 20, further preferably is 25, and further preferably is 30.

A more preferable range of F3 is, for example, 5 to 180, further preferably is 10 to 160, further preferably is 20 to 150, further preferably is 25 to 140, further preferably is 30 to 130, and further preferably is 30 to 120.

[Method for measuring Mg concentration difference Δ[Mg]]

The Mg concentration difference Δ[Mg] in the outer layer of the plating layer 20 can be determined by the following method.

A test specimen is taken from the surface-treated steel sheet 1. The test specimen is to include the base steel sheet 10, the plating layer 20, and the chemical conversion coating 30. The thickness of the test specimen is to be the same as the thickness of the surface-treated steel sheet. Glow discharge optical emission spectroscopy is performed in the thickness direction of the base steel sheet 10 from the surface of the chemical conversion coating 30 of the test specimen to measure glow emission spectroscopic spectrums (GDS spectrums) of Mg and C. Specifically, the GDS spectrum of Mg and the GDS spectrum of C are measured using a high-frequency glow discharge optical emission spectrometer (GD-OES, product name: GDA750, manufactured by Rigaku Corporation) in an argon atmosphere (Ar pressure: 3 hPa), with a power output of 30 W applied using the test specimen as a cathode. The measurement area is set to 4 mmφ, the measurement time is set to 100 seconds, and the measurement interval is set to 0.025 seconds.

Referring to FIG. 1, a position P0 where the obtained GDS spectrum of Mg and GDS spectrum of C intersect is taken as the surface of the plating layer 20 (in other words, the interface between the chemical conversion coating 30 and the plating layer 20). A region SF within a measurement time of 10 seconds from the surface of the plating layer 20 is defined as an outer layer region SF of the plating layer 20. The maximum value of the Mg concentration in the outer layer region SF of the plating layer 20 is defined as the Mg concentration [Mg]s (mass%). Further, the content of Mg in the chemical composition of the plating layer 20 obtained as described above in the section [Method for measuring chemical composition and coating mass of plating layer 20] is defined as [Mg]b (mass%).

Using the obtained Mg concentration [Mg]s and content of Mg [Mg]b, the Mg concentration difference $\Delta$[Mg] (mass%) is determined by the following formula.

$$\Delta[\text{Mg}] = [\text{Mg}]\text{s} - [\text{Mg}]\text{b}$$

[Regarding adhesive applied to surface-treated steel sheet 1]

Examples of adhesives with which good adhesiveness to the chemical conversion coating 30 of the surface-treated steel sheet 1 is obtained include adhesives that are silicone-based (including acrylic-modified and epoxy-modified), epoxy-based, acrylic resin-based, phenol-based, urethane-based, vinyl acetate-based, cyanoacrylate-based, and styrene-butadiene rubber-based.

Note that, a material to be bonded onto the chemical conversion coating 30 of the surface-treated steel sheet 1 via an adhesive is not particularly limited. The aforementioned material may be, for example, a steel sheet, mortar, float glass, ceramic tiles, porcelain tiles, and an MDF (medium-density fiberboard).

[Method for producing surface-treated steel sheet 1]

One example of a method for producing the surface-treated steel sheet of the present embodiment will now be described. A surface-treated steel sheet having the structure described above may also be produced by a production method other than the production method described hereunder. However, the production method described hereunder is a preferable example of the method for producing the surface-treated steel sheet according to the present embodiment.

One example of the method for producing the surface-treated steel sheet of the present embodiment includes the following processes.

(Process 1) Base steel sheet preparation process
(Process 2) Plating layer formation process
(Process 3) Skin pass rolling process
(Process 4) Chemical conversion coating formation process

Process 1 to process 4 are described hereunder.

[(Process 1) Base steel sheet preparation process]

In the base steel sheet preparation process, the aforementioned base steel sheet 10 is prepared. The base steel sheet 10 may be a steel sheet supplied by a third party.

[(Process 2) Plating layer formation process]

In the plating layer formation process, a plating treatment (hot-dip plating treatment) is performed on the base steel sheet 10 to form the plating layer 20 on the surface of the base steel sheet 10. Specifically, a plating bath is prepared. The composition of the plating bath is adjusted according to the composition of the plating layer 20 to be formed. After the base steel sheet 10 has been dipped in the plating bath for a certain time period, the base steel sheet 10 is removed from the plating bath by a well-known method. For example, a sink roll is arranged in the plating bath. The travelling direction of the base steel sheet 10 subjected to dipping in the plating bath is changed to an upward direction by the sink roll.

Plating is adhered to the surface of the base steel sheet 10, which has been removed from the plating bath. The coating mass of the plating adhering to the base steel sheet 10 is adjusted using a well-known gas wiping apparatus. The plating adhering to the base steel sheet 10 removed from the plating bath is cooled. The plating is solidified by cooling to form the plating layer 20.

[Preferable cooling condition in plating layer formation process]

In the plating layer formation process, preferably the following production condition 1 is satisfied.

(Preferable production condition 1)

An average cooling rate CR1 during a period in which the surface temperature of the plated base steel sheet 10 removed from the plating bath cools from 450°C to 340°C is 16 to 46°C/sec, and an average cooling rate CR2 from 340°C to 250°C is 21 to 51°C/sec.

If the average cooling rate CR1 is 16°C/sec or more and the average cooling rate CR2 is 21°C/sec or more, the structure of the plating layer 20 after solidification will be fine. Therefore, the Mg concentration in the outer layer of the plating layer 20 will be sufficiently suppressed, and the Mg concentration difference Δ[Mg] will be sufficiently low. As a result, F3 will satisfy Formula (3).

The upper limit of the average cooling rate CR1 and the upper limit of the average cooling rate CR2 are not particularly limited. A preferable upper limit of the average cooling rate CR1 is 46°C/sec. A preferable upper limit of the average cooling rate CR2 is 51°C/sec.

[(Process 3) Skin pass rolling process]

In the skin pass rolling process, the steel sheet after the plating layer formation process is subjected to skin pass rolling. In the skin pass rolling, the steel sheet on which the plating layer 20 has been formed is rolled in a cold state using a roll stand having a pair of skin-pass rolls.

[Preferable production conditions in skin pass rolling process]

In the skin pass rolling process, preferably the following production condition 2 and production condition 3 are satisfied.

(Preferable production condition 2)

An arithmetic average roughness Ra of the surfaces of the skin-pass rolls in a roll axis direction is 1.0 to 5.0 $\mu$m, and a rolling force P (t) in the skin pass rolling is 100 to 500 t.

(Preferable production condition 3)

The average cooling rates CR1 and CR2 (°C/sec), the arithmetic average roughness Ra ($\mu$m) of the surfaces of the skin-pass rolls, and the rolling force P (t) in the skin pass rolling satisfy Formula (A).

$$(CR1 + CR2)/\{2(Ra \times P)\} \geq 0.020 \quad (A)$$

Hereunder, the production condition 2 and the production condition 3 are described.

[Regarding preferable production condition 2]

The surface roughness of the skin-pass rolls influences the Mg concentration in the outer layer of the plating layer 20. If the arithmetic average roughness Ra is 5.0 $\mu$m or less, surface roughness of the plating layer 20 will be sufficiently suppressed. In such a case, excessive concentration of Mg in the outer layer of the plating layer 20 will be suppressed, and the Mg concentration difference Δ[Mg] will be sufficiently low. As a result, F3 will satisfy Formula (3). Therefore, preferably the arithmetic average roughness Ra of the surfaces of the skin-pass rolls is 5.0 $\mu$m or less.

The arithmetic average roughness Ra is measured by the following method.

For each of the pair of skin-pass rolls, the arithmetic average roughness Ra of the surface in the roll axis direction is measured in accordance with JIS B 0601: 2013. A contact-type roughness meter is used to measure the arithmetic average roughness Ra. The conditions for calculating the roughness curve are set as follows: cutoff value $\lambda$c: 80 mm, cutoff value $\lambda$s: 80 $\mu$m, measurement speed: 0.5 mm/sec, sampling length: 1 mm, and evaluation length: 10 mm. The arithmetic average value of the arithmetic average roughness (a total of two values) obtained for the respective skin-pass rolls is defined as the arithmetic average roughness Ra ($\mu$m).

From the viewpoint of the Mg concentration difference Δ[Mg], the lower limit of the arithmetic average roughness Ra is not particularly limited. However, if the arithmetic average roughness Ra is excessively small, it will be difficult for the base steel sheet 10 on which the plating layer 20 has been formed to bite into the skin-pass rolls. Therefore, the lower limit of the arithmetic average roughness Ra is 1.0 μm.

The rolling force P in the skin pass rolling influences the Mg concentration in the outer layer of the plating layer 20. If the rolling force P is 100 to 500 t, the concentration of Mg in the outer layer of the plating layer 20 will be sufficiently suppressed, and the Mg concentration difference Δ[Mg] will be sufficiently low. As a result, F3 will satisfy Formula (3). Therefore, preferably the rolling force P is 100 to 500 t.

[Regarding preferable production condition 3]

FA is defined as follows.

$$FA = (CR1 + CR2)/\{2(Ra \times P)\}$$

FA is an index relating to the Mg concentration in the outer layer of the plating layer 20. As mentioned above, the average cooling rates CR1 and CR2, the arithmetic average roughness Ra, and the rolling force P influence the Mg concentration difference Δ[Mg]. If FA is 0.020 or more, on the precondition that the production condition 1 and the production condition 2 are satisfied, the Mg concentration difference Δ[Mg] in the outer layer of the plating layer 20 of the surface-treated steel sheet 1 after production will be sufficiently low. As a result, F3 will satisfy Formula (3).

[(Process 4) Chemical conversion coating formation process]

In the chemical conversion coating formation process, an aqueous surface treating agent containing each component to be contained in the chemical conversion coating 30 is prepared. The prepared aqueous surface treating agent is applied onto the plating layer 20. The applied aqueous surface treating agent is then dried to form the chemical conversion coating 30 on the plating layer 20.

[Regarding aqueous surface treating agent]

The aqueous surface treating agent contains Zr, V, P, Co, and acrylic resin. The aqueous surface treating agent, for example, contains acrylic resin (A), a zirconium carbonate compound (B), a vanadium compound (C), a phosphorus compound (D), a cobalt compound (E), and water, and the pH of the aqueous surface treating agent is 8.0 to 11.0.

[Regarding acrylic resin (A)]

When the aqueous surface treating agent is applied and dried, the acrylic resin (A) becomes the acrylic resin contained in the chemical conversion coating 30. A preferable content of the acrylic resin (A) in the aqueous surface treating agent is 20.0 to 60.0% by mass with respect to the total solid content of the aqueous surface treating agent. Here, the phrase "with respect to the total solid content" means the mass percent when the components other than water in the aqueous surface treating agent are taken as 100.0% in percent by mass. A more preferable lower limit of the content of the acrylic resin (A) in the aqueous surface treating agent is 25.0%. A more preferable upper limit of the content of the acrylic resin (A) in the aqueous surface treating agent is 40.0%. A more preferable range of the content of the acrylic resin (A) in the aqueous surface treating agent is 25.0 to 40.0%.

The method for polymerizing the acrylic resin (A) contained in the aqueous surface treating agent is not particularly limited. For example, the acrylic resin (A) can be polymerized using suspension polymerization, emulsion polymerization, or solution polymerization. When polymerizing the acrylic resin (A), a solvent and/or a polymerization initiator may be used. The polymerization initiator is not particularly limited. The polymerization initiator is, for example, a radical polymerization initiator such as an azo-based compound or a peroxide-based compound. Preferably, the polymerization initiator is used in an amount of 0.1 to 10% by mass with respect to the total solid content of the acrylic resin. It suffices that the reaction temperature and the reaction time are in accordance with well-known conditions. The reaction temperature is, for example, within a range of normal temperature to 200°C, and the reaction time is within a range of 30 minutes to 8 hours.

[Zirconium carbonate compound (B)]

The zirconium carbonate compound (B) in the aqueous surface treating agent undergoes a crosslinking reaction with the acrylic resin (A) as a result of the aqueous surface treating agent being applied and dried. As a result, the chemical conversion coating 30 having a crosslinked structure of Zr and the acrylic resin (A) is formed. In the zirconium carbonate compound (B), in addition, carbonate ions volatilize when the aqueous surface treating agent is applied and dried. Furthermore, the Zr that remains bond to each other via oxygen to increase the molecular weight. As a result, the -Zr-OH group forms a Zr-O-M bond (M: metal element in the plating layer) with the surface of the plating layer 20.

The type of zirconium carbonate compound (B) is not particularly limited. The zirconium carbonate compound (B) is, for example, one or more kinds selected from the group consisting of zirconium carbonate, ammonium zirconium carbonate, potassium zirconium carbonate, and sodium zirconium carbonate. Preferably, the zirconium carbonate compound (B) is zirconium carbonate and/or zirconium ammonium carbonate. In such a case, the corrosion resistance increases further.

[Vanadium compound (C)]

The vanadium compound (C) contained in the aqueous surface treating agent is, for example, one or more kinds selected from the group consisting of those compounds obtained by reducing a pentavalent vanadium compound such as vanadium pentoxide ($V_2O_5$), metavanadic acid ($HVO_3$), ammonium metavanadate, sodium metavanadate, or vanadium oxytrichloride ($VOCl_3$) to a di- to tetravalent vanadium compound using an reducing agent, and vanadium compounds with an oxidation number of 4 to an oxidation number of 2 such as vanadium trioxide ($V_2O_3$), vanadium dioxide ($VO_2$), vanadium oxysulfate ($VOSO_4$), vanadium oxyoxalate [$VO(COO)_2$], vanadium oxyacetylacetonate [$VO(OC(CH_3)=CHCOCH_3)_2$], vanadium acetylacetonate [$V(OC(CH_3)=CHCOCH_3)_3$], vanadium trichloride ($VCl_3$), phosphorus vanadomolybdenate {$H_{15-x}[PV_{12-x}Mo_xO_{40}] \cdot nH_2O$ (6 < x < 12, n <30)}, vanadium sulfate ($VSO_4 \cdot 8H_2O$), vanadium dichloride ($VCl_2$), and vanadium oxide ($VO$).

[Phosphorus compound (D)]

The phosphorus compound (D) contained in the aqueous surface treating agent is, for example, an inorganic acid anion having a phosphorus-containing acid group and/or an organic acid anion having a phosphorus-containing acid group.

The inorganic acid anion having a phosphorus-containing acid group is, for example, one or more kinds selected from the group consisting of inorganic acid anions formed by releasing at least one hydrogen from inorganic acids such as orthophosphoric acid, metaphosphoric acid, condensed phosphoric acid, pyrophosphoric acid, tripolyphosphoric acid, tetraphosphoric acid, and hexametaphosphoric acid, and salts of the inorganic acid anions.

The organic acid anion having a phosphorus-containing acid group is, for example, one or more kinds selected from the group consisting of organic acid anions formed by releasing at least one hydrogen from organophosphonic acids, organophosphoric acids and the like such as 1-hydroxymethane-1,1-diphosphonic acid, 1-hydroxyethane-1,1-diphosphonic acid, 1-hydroxypropane-1,1-diphosphonic acid, 1-hydroxyethylene-1,1-diphosphonic acid, 2-hydroxyphosphonoacetic acid, aminotri(methylenephosphonic acid), ethylenediamine-N,N,N',N'-tetra(methylenephosphonic acid), hexamethylenediamine-N,N,N',N'-tetra(methylenephosphonic acid), diethylenetriamine-N,N,N',N'',N''-penta(methylenephosphonic acid), 2-phosphonic acid butane-1,2,4-tricarboxylic acid, inositol hexaphosphonic acid, and phytic acid, and salts of the organic acid anions.

[Cobalt compound (E)]

The cobalt compound (E) contained in the aqueous surface treating agent is, for example, one or more kinds selected from the group consisting of cobalt sulfate, cobalt nitrate, and cobalt carbonate.

[Lubricant]

The aqueous surface treating agent may contain a lubricant. In other words, the lubricant is an optional component. When contained, the lubricant increases the scratch resistance of the surface-treated steel sheet 1. The lubricant is, for example, one or more kinds selected from the group consisting of a polyethylene wax, a polyethylene oxide wax, and a polypropylene oxide wax.

[Regarding pH of aqueous surface treating agent]

Preferably, the pH of the aqueous surface treating agent is 8.0 to 11.0. If the pH of the aqueous surface treating agent is 8.0 or more, the zirconium carbonate compound (B) will stably dissolve in the aqueous surface treating agent. On the other hand, if the pH of the aqueous surface treating agent is 11.0 or less, excessive dissolution of the plating layer 20 upon application of the aqueous surface treating agent to the plating layer 20 can be suppressed. Furthermore, if the pH is within the aforementioned range, the aqueous surface treating agent will be stabilized. A more preferable lower limit of the pH of the aqueous surface treating agent is 8.5. A more preferable upper limit of the pH of the aqueous surface treating agent is 10.0. A more preferable range of the pH of the aqueous surface treating agent is 8.0 to 11.0. The pH of the aqueous surface treating agent can be measured, for example, by using an apparatus with the trade name HM-30R manufactured by DKK-TOA Corporation at a measurement temperature of 25°C.

The adjusting agent used to adjust the pH of the aqueous surface treating agent is not particularly limited. The adjusting agent is, for example, one or more kinds selected from the group consisting of ammonia, guanidine carbonate, carbonic acid, acetic acid, and hydrofluoric acid.

The aqueous surface treating agent is obtained by mixing the components described above in water such as deionized water or distilled water.

Where necessary, alcohols, ketones, cellosolve-based water-soluble solvents, surfactants, defoaming agents, leveling agents, antibacterial and antimold agents, thickening agents, electroconductive substances for improving weldability, coloring pigments for improving design properties, matting materials and the like may be added to the aqueous surface treating agent. The addition amount of these components is preferably less than 5% by mass with respect to the total solid content of the aqueous surface treatment liquid.

The aforementioned aqueous surface treating agent is applied onto the surface of the plating layer 20 by a well-known method to form a coating film. For example, the aqueous surface treating agent is applied using a roll coater. In this case, the coating thickness of the coating film can be adjusted by adjusting the peripheral speed ratio of the roll coater. The coating thickness of the coating film is adjusted so that the coating mass of the chemical conversion coating 30 becomes 300 to 1000 mg/m$^2$. After forming the coating film on the surface of the plating layer 20, the coating film is dried.

The surface-treated steel sheet 1 of the present embodiment is produced by performing the above processes.

EXAMPLES

The advantageous effects of the surface-treated steel sheet of the present embodiment are described more specifically hereunder by way of examples. The conditions adopted in the following examples are one example of conditions adopted for confirming the feasibility and advantageous effects of the surface-treated steel sheet of the present embodiment. Accordingly, the surface-treated steel sheet of the present embodiment is not limited to this one example of conditions.

Base steel sheets on which plating layers having the chemical compositions described in Table 1 (Table 1-1 and Table 1-2) were prepared.

[Table 1-1]

TABLE1-1

| Test Number | Chemical Composition (Unit Is Mass Percent; Balance: Impurities) | | | | | | | | | | |
|---|---|---|---|---|---|---|---|---|---|---|---|
| | Essential Elements | | | Optional Elements | | | | | | | |
| | | | | First Group | | | Second Group | | | | Third Group |
| | Zn | Al | Mg | Sn | Bi | In | Ca | Y | La | Ce | Si |
| 1 | 69.4 | 24.5 | 6.0 | 0.00 | 0.00 | 0.00 | 0.00 | 0.00 | 0.00 | 0.00 | 0.00 |
| 2 | 88.4 | 5.5 | 6.0 | 0.00 | 0.00 | 0.00 | 0.00 | 0.00 | 0.00 | 0.00 | 0.00 |
| 3 | 69.9 | 18.0 | 12.0 | 0.00 | 0.00 | 0.00 | 0.00 | 0.00 | 0.00 | 0.00 | 0.00 |
| 4 | 78.4 | 18.0 | 3.5 | 0.00 | 0.00 | 0.00 | 0.00 | 0.00 | 0.00 | 0.00 | 0.00 |
| 5 | 75.9 | 18.0 | 6.0 | 0.00 | 0.00 | 0.00 | 0.00 | 0.00 | 0.00 | 0.00 | 0.00 |
| 6 | 82.7 | 12.0 | 5.0 | 0.00 | 0.00 | 0.00 | 0.10 | 0.00 | 0.00 | 0.00 | 0.10 |
| 7 | 73.4 | 18.0 | 6.0 | 2.50 | 0.00 | 0.00 | 0.00 | 0.00 | 0.00 | 0.00 | 0.00 |
| 8 | 71.4 | 18.0 | 6.0 | 0.00 | 4.50 | 0.00 | 0.00 | 0.00 | 0.00 | 0.00 | 0.00 |
| 9 | 74.4 | 18.0 | 6.0 | 0.00 | 0.00 | 1.50 | 0.00 | 0.00 | 0.00 | 0.00 | 0.00 |
| 10 | 73.4 | 18.0 | 6.0 | 0.00 | 0.00 | 0.00 | 2.50 | 0.00 | 0.00 | 0.00 | 0.00 |
| 11 | 75.5 | 18.0 | 6.0 | 0.00 | 0.00 | 0.00 | 0.00 | 0.40 | 0.00 | 0.00 | 0.00 |

(continued)

| Test Number | Chemical Composition (Unit Is Mass Percent; Balance: Impurities) | | | | | | | | | | |
|---|---|---|---|---|---|---|---|---|---|---|---|
| | Essential Elements | | | Optional Elements | | | | | | | |
| | | | | First Group | | | Second Group | | | | Third Group |
| | Zn | Al | Mg | Sn | Bi | In | Ca | Y | La | Ce | Si |
| 12 | 75.5 | 18.0 | 6.0 | 0.00 | 0.00 | 0.00 | 0.00 | 0.00 | 0.40 | 0.00 | 0.00 |
| 13 | 75.5 | 18.0 | 6.0 | 0.00 | 0.00 | 0.00 | 0.00 | 0.00 | 0.00 | 0.40 | 0.00 |
| 14 | 73.9 | 18.0 | 6.0 | 0.00 | 0.00 | 0.00 | 0.00 | 0.00 | 0.00 | 0.00 | 2.00 |
| 15 | 75.7 | 18.0 | 6.0 | 0.00 | 0.00 | 0.00 | 0.00 | 0.00 | 0.00 | 0.00 | 0.00 |
| 16 | 75.7 | 18.0 | 6.0 | 0.00 | 0.00 | 0.00 | 0.00 | 0.00 | 0.00 | 0.00 | 0.00 |
| 17 | 75.7 | 18.0 | 6.0 | 0.00 | 0.00 | 0.00 | 0.00 | 0.00 | 0.00 | 0.00 | 0.00 |
| 18 | 75.7 | 18.0 | 6.0 | 0.00 | 0.00 | 0.00 | 0.00 | 0.00 | 0.00 | 0.00 | 0.00 |
| 19 | 75.7 | 18.0 | 6.0 | 0.00 | 0.00 | 0.00 | 0.00 | 0.00 | 0.00 | 0.00 | 0.00 |
| 20 | 75.7 | 18.0 | 6.0 | 0.00 | 0.00 | 0.00 | 0.00 | 0.00 | 0.00 | 0.00 | 0.00 |
| 21 | 75.7 | 18.0 | 6.0 | 0.00 | 0.00 | 0.00 | 0.00 | 0.00 | 0.00 | 0.00 | 0.00 |
| 22 | 75.7 | 18.0 | 6.0 | 0.00 | 0.00 | 0.00 | 0.00 | 0.00 | 0.00 | 0.00 | 0.00 |
| 23 | 71.5 | 18.0 | 6.0 | 0.00 | 0.00 | 0.00 | 0.00 | 0.00 | 0.00 | 0.00 | 0.00 |
| 24 | 75.5 | 18.0 | 6.0 | 0.00 | 0.00 | 0.00 | 0.00 | 0.00 | 0.00 | 0.00 | 0.00 |
| 25 | 75.5 | 18.0 | 6.0 | 0.00 | 0.00 | 0.00 | 0.00 | 0.00 | 0.00 | 0.00 | 0.00 |
| 26 | 75.5 | 18.0 | 6.0 | 0.00 | 0.00 | 0.00 | 0.00 | 0.00 | 0.00 | 0.00 | 0.00 |
| 27 | 75.5 | 18.0 | 6.0 | 0.00 | 0.00 | 0.00 | 0.00 | 0.00 | 0.00 | 0.00 | 0.00 |
| 28 | 76.0 | 18.0 | 6.0 | 0.00 | 0.00 | 0.00 | 0.00 | 0.00 | 0.00 | 0.00 | 0.00 |
| 29 | 65.5 | 24.5 | 6.0 | 1.50 | 0.00 | 0.00 | 0.00 | 0.40 | 0.00 | 0.00 | 2.00 |
| 30 | 83.7 | 5.5 | 6.0 | 0.00 | 4.50 | 0.00 | 0.00 | 0.00 | 0.00 | 0.00 | 0.00 |
| 31 | 68.2 | 18.0 | 12.0 | 0.00 | 0.00 | 1.50 | 0.00 | 0.00 | 0.00 | 0.00 | 0.00 |
| 32 | 73.2 | 18.0 | 3.5 | 2.50 | 0.00 | 0.00 | 2.50 | 0.00 | 0.00 | 0.00 | 0.00 |
| 33 | 70.8 | 18.0 | 6.0 | 0.00 | 4.50 | 0.00 | 0.00 | 0.00 | 0.40 | 0.00 | 0.00 |
| 34 | 69.6 | 18.0 | 6.0 | 0.00 | 0.00 | 1.50 | 0.00 | 0.00 | 0.00 | 0.40 | 0.00 |
| 35 | 70.5 | 18.0 | 6.0 | 2.50 | 0.00 | 0.00 | 2.50 | 0.00 | 0.00 | 0.00 | 0.00 |
| 36 | 75.9 | 18.0 | 6.0 | 0.00 | 0.00 | 0.00 | 0.00 | 0.00 | 0.00 | 0.00 | 0.00 |
| 37 | 75.9 | 18.0 | 6.0 | 0.00 | 0.00 | 0.00 | 0.00 | 0.00 | 0.00 | 0.00 | 0.00 |
| 38 | 75.9 | 18.0 | 6.0 | 0.00 | 0.00 | 0.00 | 0.00 | 0.00 | 0.00 | 0.00 | 0.00 |
| 39 | 75.9 | 18.0 | 6.0 | 0.00 | 0.00 | 0.00 | 0.00 | 0.00 | 0.00 | 0.00 | 0.00 |
| 40 | 75.9 | 18.0 | 6.0 | 0.00 | 0.00 | 0.00 | 0.00 | 0.00 | 0.00 | 0.00 | 0.00 |
| 41 | 75.9 | 18.0 | 6.0 | 0.00 | 0.00 | 0.00 | 0.00 | 0.00 | 0.00 | 0.00 | 0.00 |
| 42 | 75.9 | 18.0 | 6.0 | 0.00 | 0.00 | 0.00 | 0.00 | 0.00 | 0.00 | 0.00 | 0.00 |
| 43 | 75.9 | 18.0 | 6.0 | 0.00 | 0.00 | 0.00 | 0.00 | 0.00 | 0.00 | 0.00 | 0.00 |
| 44 | 75.9 | 18.0 | 6.0 | 0.00 | 0.00 | 0.00 | 0.00 | 0.00 | 0.00 | 0.00 | 0.00 |
| 45 | 75.9 | 18.0 | 6.0 | 0.00 | 0.00 | 0.00 | 0.00 | 0.00 | 0.00 | 0.00 | 0.00 |
| 46 | 73.4 | 18.0 | 6.0 | 2.50 | 0.00 | 0.00 | 0.00 | 0.00 | 0.00 | 0.00 | 0.00 |
| 47 | 75.9 | 18.0 | 6.0 | 0.00 | 0.00 | 0.00 | 0.00 | 0.00 | 0.00 | 0.00 | 0.00 |

(continued)

| Test Number | Chemical Composition (Unit Is Mass Percent; Balance: Impurities) | | | | | | | | | | |
| --- | --- | --- | --- | --- | --- | --- | --- | --- | --- | --- | --- |
| | Essential Elements | | | Optional Elements | | | | | | | |
| | | | | First Group | | | Second Group | | | | Third Group |
| | Zn | Al | Mg | Sn | Bi | In | Ca | Y | La | Ce | Si |
| 48 | 71.4 | 18.0 | 6.0 | 0.00 | 4.50 | 0.00 | 0.00 | 0.00 | 0.00 | 0.00 | 0.00 |
| 49 | 75.9 | 18.0 | 6.0 | 0.00 | 0.00 | 0.00 | 0.00 | 0.00 | 0.00 | 0.00 | 0.00 |
| 50 | 74.4 | 18.0 | 6.0 | 0.00 | 0.00 | 1.50 | 0.00 | 0.00 | 0.00 | 0.00 | 0.00 |
| 51 | 75.9 | 18.0 | 6.0 | 0.00 | 0.00 | 0.00 | 0.00 | 0.00 | 0.00 | 0.00 | 0.00 |
| 52 | 73.4 | 18.0 | 6.0 | 0.00 | 0.00 | 0.00 | 2.50 | 0.00 | 0.00 | 0.00 | 0.00 |
| 53 | 75.9 | 18.0 | 6.0 | 0.00 | 0.00 | 0.00 | 0.00 | 0.00 | 0.00 | 0.00 | 0.00 |
| 54 | 75.5 | 18.0 | 6.0 | 0.00 | 0.00 | 0.00 | 0.00 | 0.00 | 0.40 | 0.00 | 0.00 |
| 55 | 86.0 | 11.0 | 3.0 | 0.00 | 0.00 | 0.00 | 0.00 | 0.00 | 0.00 | 0.00 | 0.00 |

[Table 1-2]

TABLE1-2

| Test Number | Chemical Composition (Unit Is Mass Percent; Balance: Impurities) | | | | | | | | | | | | |
| --- | --- | --- | --- | --- | --- | --- | --- | --- | --- | --- | --- | --- | --- |
| | Optional Elements | | | | | | | | | | | | |
| | Fourth Group | | | | | | | | Fifth Group | Sixth Group | | | |
| | Cr | Ti | Ni | Co | v | Nb | Cu | Mn | Fe | Sr | Sb | Pb | B |
| 1 | 0.0 | 0.0 | 0.0 | 0.0 | 0.0 | 0.0 | 0.0 | 0.0 | 0.1 | 0.0 | 0.0 | 0.0 | 0.0 |
| 2 | 0.0 | 0.0 | 0.0 | 0.0 | 0.0 | 0.0 | 0.0 | 0.0 | 0.1 | 0.0 | 0.0 | 0.0 | 0.0 |
| 3 | 0.0 | 0.0 | 0.0 | 0.0 | 0.0 | 0.0 | 0.0 | 0.0 | 0.1 | 0.0 | 0.0 | 0.0 | 0.0 |
| 4 | 0.0 | 0.0 | 0.0 | 0.0 | 0.0 | 0.0 | 0.0 | 0.0 | 0.1 | 0.0 | 0.0 | 0.0 | 0.0 |
| 5 | 0.0 | 0.0 | 0.0 | 0.0 | 0.0 | 0.0 | 0.0 | 0.0 | 0.1 | 0.0 | 0.0 | 0.0 | 0.0 |
| 6 | 0.0 | 0.0 | 0.0 | 0.0 | 0.0 | 0.0 | 0.0 | 0.0 | 0.1 | 0.0 | 0.0 | 0.0 | 0.0 |
| 7 | 0.0 | 0.0 | 0.0 | 0.0 | 0.0 | 0.0 | 0.0 | 0.0 | 0.1 | 0.0 | 0.0 | 0.0 | 0.0 |
| 8 | 0.0 | 0.0 | 0.0 | 0.0 | 0.0 | 0.0 | 0.0 | 0.0 | 0.1 | 0.0 | 0.0 | 0.0 | 0.0 |
| 9 | 0.0 | 0.0 | 0.0 | 0.0 | 0.0 | 0.0 | 0.0 | 0.0 | 0.1 | 0.0 | 0.0 | 0.0 | 0.0 |
| 10 | 0.0 | 0.0 | 0.0 | 0.0 | 0.0 | 0.0 | 0.0 | 0.0 | 0.1 | 0.0 | 0.0 | 0.0 | 0.0 |
| 11 | 0.0 | 0.0 | 0.0 | 0.0 | 0.0 | 0.0 | 0.0 | 0.0 | 0.1 | 0.0 | 0.0 | 0.0 | 0.0 |
| 12 | 0.0 | 0.0 | 0.0 | 0.0 | 0.0 | 0.0 | 0.0 | 0.0 | 0.1 | 0.0 | 0.0 | 0.0 | 0.0 |
| 13 | 0.0 | 0.0 | 0.0 | 0.0 | 0.0 | 0.0 | 0.0 | 0.0 | 0.1 | 0.0 | 0.0 | 0.0 | 0.0 |
| 14 | 0.0 | 0.0 | 0.0 | 0.0 | 0.0 | 0.0 | 0.0 | 0.0 | 0.1 | 0.0 | 0.0 | 0.0 | 0.0 |
| 15 | 0.2 | 0.0 | 0.0 | 0.0 | 0.0 | 0.0 | 0.0 | 0.0 | 0.1 | 0.0 | 0.0 | 0.0 | 0.0 |
| 16 | 0.0 | 0.2 | 0.0 | 0.0 | 0.0 | 0.0 | 0.0 | 0.0 | 0.1 | 0.0 | 0.0 | 0.0 | 0.0 |
| 17 | 0.0 | 0.0 | 0.2 | 0.0 | 0.0 | 0.0 | 0.0 | 0.0 | 0.1 | 0.0 | 0.0 | 0.0 | 0.0 |
| 18 | 0.0 | 0.0 | 0.0 | 0.2 | 0.0 | 0.0 | 0.0 | 0.0 | 0.1 | 0.0 | 0.0 | 0.0 | 0.0 |
| 19 | 0.0 | 0.0 | 0.0 | 0.0 | 0.2 | 0.0 | 0.0 | 0.0 | 0.1 | 0.0 | 0.0 | 0.0 | 0.0 |
| 20 | 0.0 | 0.0 | 0.0 | 0.0 | 0.0 | 0.2 | 0.0 | 0.0 | 0.1 | 0.0 | 0.0 | 0.0 | 0.0 |

(continued)

| Test Number | Chemical Composition (Unit Is Mass Percent; Balance: Impurities) | | | | | | | | | | | | |
| | Optional Elements | | | | | | | | | | | | |
| | Fourth Group | | | | | | | | Fifth Group | Sixth Group | | | |
| | Cr | Ti | Ni | Co | v | Nb | Cu | Mn | Fe | Sr | Sb | Pb | B |
| 21 | 0.0 | 0.0 | 0.0 | 0.0 | 0.0 | 0.0 | 0.2 | 0.0 | 0.1 | 0.0 | 0.0 | 0.0 | 0.0 |
| 22 | 0.0 | 0.0 | 0.0 | 0.0 | 0.0 | 0.0 | 0.0 | 0.2 | 0.1 | 0.0 | 0.0 | 0.0 | 0.0 |
| 23 | 0.0 | 0.0 | 0.0 | 0.0 | 0.0 | 0.0 | 0.0 | 0.0 | 4.5 | 0.0 | 0.0 | 0.0 | 0.0 |
| 24 | 0.0 | 0.0 | 0.0 | 0.0 | 0.0 | 0.0 | 0.0 | 0.0 | 0.1 | 0.4 | 0.0 | 0.0 | 0.0 |
| 25 | 0.0 | 0.0 | 0.0 | 0.0 | 0.0 | 0.0 | 0.0 | 0.0 | 0.1 | 0.0 | 0.4 | 0.0 | 0.0 |
| 26 | 0.0 | 0.0 | 0.0 | 0.0 | 0.0 | 0.0 | 0.0 | 0.0 | 0.1 | 0.0 | 0.0 | 0.4 | 0.0 |
| 27 | 0.0 | 0.0 | 0.0 | 0.0 | 0.0 | 0.0 | 0.0 | 0.0 | 0.1 | 0.0 | 0.0 | 0.0 | 0.4 |
| 28 | 0.0 | 0.0 | 0.0 | 0.0 | 0.0 | 0.0 | 0.0 | 0.0 | 0.0 | 0.0 | 0.0 | 0.0 | 0.0 |
| 29 | 0.0 | 0.0 | 0.0 | 0.0 | 0.0 | 0.0 | 0.0 | 0.0 | 0.1 | 0.0 | 0.0 | 0.0 | 0.0 |
| 30 | 0.2 | 0.0 | 0.0 | 0.0 | 0.0 | 0.0 | 0.0 | 0.0 | 0.1 | 0.0 | 0.0 | 0.0 | 0.0 |
| 31 | 0.0 | 0.2 | 0.0 | 0.0 | 0.0 | 0.0 | 0.0 | 0.0 | 0.1 | 0.0 | 0.0 | 0.0 | 0.0 |
| 32 | 0.0 | 0.0 | 0.2 | 0.0 | 0.0 | 0.0 | 0.0 | 0.0 | 0.1 | 0.0 | 0.0 | 0.0 | 0.0 |
| 33 | 0.0 | 0.0 | 0.0 | 0.0 | 0.0 | 0.2 | 0.0 | 0.0 | 0.1 | 0.0 | 0.0 | 0.0 | 0.0 |
| 34 | 0.0 | 0.0 | 0.0 | 0.0 | 0.0 | 0.0 | 0.0 | 0.0 | 4.5 | 0.0 | 0.0 | 0.0 | 0.0 |
| 35 | 0.0 | 0.0 | 0.0 | 0.0 | 0.0 | 0.0 | 0.0 | 0.0 | 0.1 | 0.4 | 0.0 | 0.0 | 0.0 |
| 36 | 0.0 | 0.0 | 0.0 | 0.0 | 0.0 | 0.0 | 0.0 | 0.0 | 0.1 | 0.0 | 0.0 | 0.0 | 0.0 |
| 37 | 0.0 | 0.0 | 0.0 | 0.0 | 0.0 | 0.0 | 0.0 | 0.0 | 0.1 | 0.0 | 0.0 | 0.0 | 0.0 |
| 38 | 0.0 | 0.0 | 0.0 | 0.0 | 0.0 | 0.0 | 0.0 | 0.0 | 0.1 | 0.0 | 0.0 | 0.0 | 0.0 |
| 39 | 0.0 | 0.0 | 0.0 | 0.0 | 0.0 | 0.0 | 0.0 | 0.0 | 0.1 | 0.0 | 0.0 | 0.0 | 0.0 |
| 40 | 0.0 | 0.0 | 0.0 | 0.0 | 0.0 | 0.0 | 0.0 | 0.0 | 0.1 | 0.0 | 0.0 | 0.0 | 0.0 |
| 41 | 0.0 | 0.0 | 0.0 | 0.0 | 0.0 | 0.0 | 0.0 | 0.0 | 0.1 | 0.0 | 0.0 | 0.0 | 0.0 |
| 42 | 0.0 | 0.0 | 0.0 | 0.0 | 0.0 | 0.0 | 0.0 | 0.0 | 0.1 | 0.0 | 0.0 | 0.0 | 0.0 |
| 43 | 0.0 | 0.0 | 0.0 | 0.0 | 0.0 | 0.0 | 0.0 | 0.0 | 0.1 | 0.0 | 0.0 | 0.0 | 0.0 |
| 44 | 0.0 | 0.0 | 0.0 | 0.0 | 0.0 | 0.0 | 0.0 | 0.0 | 0.1 | 0.0 | 0.0 | 0.0 | 0.0 |
| 45 | 0.0 | 0.0 | 0.0 | 0.0 | 0.0 | 0.0 | 0.0 | 0.0 | 0.1 | 0.0 | 0.0 | 0.0 | 0.0 |
| 46 | 0.0 | 0.0 | 0.0 | 0.0 | 0.0 | 0.0 | 0.0 | 0.0 | 0.1 | 0.0 | 0.0 | 0.0 | 0.0 |
| 47 | 0.0 | 0.0 | 0.0 | 0.0 | 0.0 | 0.0 | 0.0 | 0.0 | 0.1 | 0.0 | 0.0 | 0.0 | 0.0 |
| 48 | 0.0 | 0.0 | 0.0 | 0.0 | 0.0 | 0.0 | 0.0 | 0.0 | 0.1 | 0.0 | 0.0 | 0.0 | 0.0 |
| 49 | 0.0 | 0.0 | 0.0 | 0.0 | 0.0 | 0.0 | 0.0 | 0.0 | 0.1 | 0.0 | 0.0 | 0.0 | 0.0 |
| 50 | 0.0 | 0.0 | 0.0 | 0.0 | 0.0 | 0.0 | 0.0 | 0.0 | 0.1 | 0.0 | 0.0 | 0.0 | 0.0 |
| 51 | 0.0 | 0.0 | 0.0 | 0.0 | 0.0 | 0.0 | 0.0 | 0.0 | 0.1 | 0.0 | 0.0 | 0.0 | 0.0 |
| 52 | 0.0 | 0.0 | 0.0 | 0.0 | 0.0 | 0.0 | 0.0 | 0.0 | 0.1 | 0.0 | 0.0 | 0.0 | 0.0 |
| 53 | 0.0 | 0.0 | 0.0 | 0.0 | 0.0 | 0.0 | 0.0 | 0.0 | 0.1 | 0.0 | 0.0 | 0.0 | 0.0 |
| 54 | 0.0 | 0.0 | 0.0 | 0.0 | 0.0 | 0.0 | 0.0 | 0.0 | 0.1 | 0.0 | 0.0 | 0.0 | 0.0 |
| 55 | 0.0 | 0.0 | 0.0 | 0.0 | 0.0 | 0.0 | 0.0 | 0.0 | 0.1 | 0.0 | 0.0 | 0.0 | 0.0 |

The plating layers were formed by a hot-dip plating treatment. The coating mass of each plating layer was within the range of 40 to 300 mg/m$^2$.

Note that, in the hot-dip plating treatment, the average cooling rate CR1 (°C/sec) during the period in which the surface temperature of the steel sheet that had been removed from the plating bath cooled from 450 to 340°C, and the average cooling rate CR2 (°C/sec) during the period in which the surface temperature cooled from 340 to 250°C were as shown in Table 2.

[Table 2]

TABLE2

| Test Number | Production Condition 1 | | Production Condition 2 | | Production Condition 3 |
|---|---|---|---|---|---|
| | CR1 (°C/sec) | CR2 (°C/sec) | Ra (μm) | P (t) | FA |
| 1 | 29 | 32 | 2.1 | 150 | 0.097 |
| 2 | 34 | 34 | 2.6 | 140 | 0.093 |
| 3 | 37 | 39 | 3.0 | 200 | 0.063 |
| 4 | 31 | 45 | 1.6 | 440 | 0.054 |
| 5 | 27 | 26 | 1.1 | 280 | 0.086 |
| 6 | 24 | 28 | 1.9 | 220 | 0.062 |
| 7 | 33 | 32 | 2.3 | 120 | 0.118 |
| 8 | 36 | 36 | 2.2 | 150 | 0.109 |
| 9 | 41 | 38 | 2.3 | 130 | 0.132 |
| 10 | 31 | 34 | 2.0 | 140 | 0.116 |
| 11 | 32 | 32 | 1.9 | 110 | 0.153 |
| 12 | 28 | 42 | 2.1 | 160 | 0.104 |
| 13 | 27 | 41 | 2.3 | 180 | 0.082 |
| 14 | 33 | 32 | 2.2 | 200 | 0.074 |
| 15 | 40 | 39 | 2.2 | 170 | 0.106 |
| 16 | 32 | 31 | 2.1 | 190 | 0.079 |
| 17 | 29 | 27 | 1.9 | 140 | 0.105 |
| 18 | 28 | 36 | 2.1 | 160 | 0.095 |
| 19 | 24 | 35 | 2.3 | 200 | 0.064 |
| 20 | 23 | 29 | 2.9 | 180 | 0.050 |
| 21 | 36 | 39 | 3.2 | 160 | 0.073 |
| 22 | 24 | 35 | 1.7 | 170 | 0.102 |
| 23 | 33 | 32 | 1.9 | 190 | 0.090 |
| 24 | 35 | 34 | 2.3 | 200 | 0.075 |
| 25 | 32 | 40 | 2.4 | 210 | 0.071 |
| 26 | 29 | 36 | 2.1 | 160 | 0.097 |
| 27 | 24 | 35 | 2.6 | 170 | 0.067 |
| 28 | 25 | 34 | 1.7 | 190 | 0.091 |
| 29 | 20 | 39 | 2.6 | 210 | 0.054 |
| 30 | 19 | 35 | 3.7 | 200 | 0.036 |
| 31 | 21 | 28 | 2.3 | 170 | 0.063 |

(continued)

| Test Number | Production Condition 1 | | Production Condition 2 | | Production Condition 3 |
|---|---|---|---|---|---|
| | CR1 (°C/sec) | CR2 (°C/sec) | Ra ($\mu$m) | P (t) | FA |
| 32 | 26 | 36 | 2.6 | 130 | 0.092 |
| 33 | 35 | 34 | 2.4 | 180 | 0.080 |
| 34 | 32 | 39 | 1.9 | 200 | 0.093 |
| 35 | 21 | 29 | 2.1 | 220 | 0.054 |
| 36 | 14 | 36 | 1.9 | 210 | 0.063 |
| 37 | 12 | 37 | 2.2 | 170 | 0.066 |
| 38 | 33 | 16 | 2.3 | 160 | 0.067 |
| 39 | 21 | 17 | 2.1 | 140 | 0.065 |
| 40 | 28 | 36 | 5.5 | 150 | 0.039 |
| 41 | 36 | 35 | 2.3 | 90 | 0.171 |
| 42 | 29 | 33 | 2.4 | 535 | 0.024 |
| 43 | 21 | 24 | 3.2 | 400 | 0.018 |
| 44 | 20 | 22 | 3.5 | 390 | 0.015 |
| 45 | 26 | 39 | 2.6 | 190 | 0.066 |
| 46 | 34 | 42 | 2.1 | 140 | 0.129 |
| 47 | 25 | 31 | 2.2 | 160 | 0.080 |
| 48 | 36 | 36 | 1.9 | 180 | 0.105 |
| 49 | 32 | 41 | 2.3 | 210 | 0.076 |
| 50 | 25 | 47 | 2.2 | 260 | 0.063 |
| 51 | 29 | 36 | 2.4 | 120 | 0.113 |
| 52 | 25 | 31 | 1.9 | 170 | 0.087 |
| 53 | 32 | 35 | 2.4 | 190 | 0.073 |
| 54 | 31 | 29 | 2.2 | 170 | 0.080 |
| 55 | 27 | 36 | 2.3 | 130 | 0.105 |

The steel sheets on which a plating layer had been formed were subjected to skin pass rolling. The arithmetic average roughness Ra ($\mu$m) of the skin-pass rolls and the rolling force P (t) used in the skin pass rolling were as shown in Table 2. In addition, the FA value (= (CR1 + CR2)/{2(Ra $\times$ P)}) was as shown in Table 2.

Aqueous surface treating agents for which the compounding ratios were as shown in Table 3 were prepared by the following method. The respective components shown in Table 3 were added to a predetermined amount of deionized water under stirring using a propeller stirrer, and the solid content concentration was adjusted to 15% by mass. The pH of each aqueous surface treating agent was adjusted to 8.0 to 11.0. Carbonic acid and/or ammonia was used as an agent for adjusting the pH of the aqueous surface treating agent.

[Table 3]

TABLE3

| Test Number | Zr | | Acrylic Resin | | V | | P | | Co | |
|---|---|---|---|---|---|---|---|---|---|---|
| | Type | Content (mass%) | Type | Content (mass%) | Type | Content (mass%) | Type | Content (mass%) | Type | Content (mass%) |
| 1 | B1 | 48.3 | A1 | 30.0 | C1 | 13.5 | D1 | 7.2 | E1 | 1.0 |
| 2 | B1 | 37.0 | A1 | 40.0 | C1 | 14.0 | D1 | 8.0 | E1 | 1.0 |
| 3 | B1 | 59.0 | A1 | 20.0 | C1 | 11.0 | D1 | 9.0 | E1 | 1.0 |
| 4 | B1 | 33.0 | A1 | 50.0 | C1 | 8.5 | D1 | 7.5 | E1 | 1.0 |
| 5 | B1 | 190 | A1 | 60.0 | C1 | 12.0 | D1 | 8.0 | E1 | 1.0 |
| 6 | B1 | 50.8 | A1 | 30.0 | C1 | 11.0 | D1 | 7.2 | E1 | 1.0 |
| 7 | B1 | 48.7 | A13 | 30.0 | C1 | 9.5 | D1 | 10.9 | E1 | 1.0 |
| 8 | B1 | 48.3 | A14 | 30.0 | C1 | 13.5 | D1 | 7.2 | E1 | 1.0 |
| 9 | B1 | 48.0 | A15 | 30.0 | C1 | 15.0 | D1 | 6.0 | E1 | 1.0 |
| 10 | B1 | 49.0 | A16 | 30.0 | C1 | 8.0 | D1 | 12.0 | E1 | 1.0 |
| 11 | B1 | 52.0 | A17 | 30.0 | C1 | 9.0 | D1 | 8.0 | E1 | 1.0 |
| 12 | B2 | 48.6 | A1 | 30.0 | C1 | 9.5 | D1 | 10.9 | E1 | 1.0 |
| 13 | B3 | 47.0 | A2 | 30.0 | C1 | 12.0 | D1 | 10.0 | E1 | 1.0 |
| 14 | B1 | 51.0 | A3 | 30.0 | C2 | 11.0 | D1 | 7.0 | E1 | 1.0 |
| 15 | B1 | 47.0 | A4 | 30.0 | C1 | 14.0 | D2 | 8.0 | E1 | 1.0 |
| 16 | B1 | 48.0 | A5 | 30.0 | C1 | 10.0 | D1 | 11.0 | E2 | 1.0 |
| 17 | B1 | 49.0 | A6 | 30.0 | C1 | 11.0 | D1 | 9.0 | E1 | 1.0 |
| 18 | B1 | 47.0 | A7 | 30.0 | C1 | 12.0 | D1 | 10.0 | E1 | 1.0 |
| 19 | B1 | 53.0 | A8 | 30.0 | C1 | 9.0 | D1 | 7.0 | E1 | 1.0 |
| 20 | B1 | 49.0 | A9 | 30.0 | C1 | 12.0 | D1 | 8.0 | E1 | 1.0 |
| 21 | B1 | 46.0 | A10 | 30.0 | C1 | 13.0 | D1 | 10.0 | E1 | 1.0 |
| 22 | B1 | 49.0 | A11 | 30.0 | C1 | 9.0 | D1 | 11.0 | E1 | 1.0 |
| 23 | B1 | 50.0 | A12 | 30.0 | C1 | 10.0 | D1 | 9.0 | E1 | 1.0 |
| 24 | B1 | 49.0 | A1 | 30.0 | C1 | 10.0 | D1 | 10.0 | E1 | 1.0 |
| 25 | B1 | 47.0 | A1 | 30.0 | C1 | 11.0 | D1 | 11.0 | E1 | 1.0 |
| 26 | B1 | 48.0 | A1 | 30.0 | C1 | 12.0 | D1 | 9.0 | E1 | 1.0 |
| 27 | B1 | 50.0 | A1 | 30.0 | C1 | 11.0 | D1 | 8.0 | E1 | 1.0 |
| 28 | B1 | 50.0 | A13 | 30.0 | C1 | 10.0 | D1 | 9.0 | E1 | 1.0 |
| 29 | B1 | 51.0 | A1 | 30.0 | C1 | 9.0 | D1 | 9.0 | E1 | 1.0 |
| 30 | B1 | 49.0 | A1 | 30.0 | C1 | 10.0 | D1 | 10.0 | E1 | 1.0 |
| 31 | B1 | 47.0 | A1 | 30.0 | C1 | 11.0 | D1 | 11.0 | E1 | 1.0 |
| 32 | B1 | 49.0 | A1 | 30.0 | C1 | 10.0 | D1 | 10.0 | E1 | 1.0 |
| 33 | B1 | 48.0 | A1 | 30.0 | C1 | 12.0 | D1 | 9.0 | E1 | 1.0 |
| 34 | B1 | 50.0 | A1 | 30.0 | C1 | 9.0 | D1 | 10.0 | E1 | 1.0 |
| 35 | B1 | 48.0 | A1 | 30.0 | C1 | 10.0 | D1 | 11.0 | E1 | 1.0 |
| 36 | B1 | 48.3 | A1 | 30.0 | C1 | 13.5 | D1 | 7.2 | E1 | 1.0 |
| 37 | B1 | 48.3 | A1 | 30.0 | C1 | 13.5 | D1 | 7.2 | E1 | 1.0 |

(continued)

| Test Number | Aqueous Surface Treating Agent | | | | | | | | | |
|---|---|---|---|---|---|---|---|---|---|---|
| | Zr | | Acrylic Resin | | V | | P | | Co | |
| | Type | Content (mass%) | Type | Content (mass%) | Type | Content (mass%) | Type | Content (mass%) | Type | Content (mass%) |
| 38 | B1 | 52.8 | A1 | 30.0 | C1 | 9.0 | D1 | 7.2 | E1 | 1.0 |
| 39 | B1 | 52.8 | A1 | 30.0 | C1 | 9.0 | D1 | 7.2 | E1 | 1.0 |
| 40 | B1 | 49.5 | A1 | 30.0 | C1 | 9.5 | D1 | 10.0 | E1 | 1.0 |
| 41 | B1 | 49.5 | A1 | 30.0 | C1 | 9.5 | D1 | 10.0 | E1 | 1.0 |
| 42 | B1 | 52.0 | A1 | 30.0 | C1 | 12.0 | D1 | 5.0 | E1 | 1.0 |
| 43 | B1 | 52.0 | A1 | 30.0 | C1 | 12.0 | D1 | 5.0 | E1 | 1.0 |
| 44 | B1 | 50.0 | A1 | 30.0 | C1 | 13.0 | D1 | 6.0 | E1 | 1.0 |
| 45 | B1 | 48.0 | A1 | 30.0 | C1 | 12.0 | D1 | 9.0 | E1 | 1.0 |
| 46 | B1 | 48.3 | A1 | 30.0 | C1 | 13.5 | D1 | 7.2 | E1 | 1.0 |
| 47 | B1 | 52.8 | A1 | 30.0 | C1 | 9.0 | D1 | 7.2 | E1 | 1.0 |
| 48 | B1 | 52.8 | A1 | 30.0 | C1 | 9.0 | D1 | 7.2 | E1 | 1.0 |
| 49 | B1 | 48.0 | A1 | 30.0 | C1 | 7.0 | D1 | 14.0 | E1 | 1.0 |
| 50 | B1 | 48.0 | A1 | 30.0 | C1 | 7.0 | D1 | 14.0 | E1 | 1.0 |
| 51 | B1 | 48.0 | A1 | 30.0 | C1 | 16.0 | D1 | 5.0 | E1 | 1.0 |
| 52 | B1 | 48.0 | A1 | 30.0 | C1 | 16.0 | D1 | 5.0 | E1 | 1.0 |
| 53 | B1 | 45.8 | A1 | 30.0 | C1 | 16.0 | D1 | 7.2 | E1 | 1.0 |
| 54 | B1 | 45.8 | A1 | 30.0 | C1 | 16.0 | D1 | 7.2 | E1 | 1.0 |
| 55 | B1 | 54.8 | A1 | 30.0 | C1 | 7.0 | D1 | 7.2 | E1 | 1.0 |

The respective component types shown in Table 3 were adjusted as follows.

[Acrylic resin]

Styrene (b1), (meth)acrylic acid (b2), a (meth)acrylic acid alkyl ester (b3), and acrylonitrile (b4), for which abbreviations are shown in Table 4, were used at the ratios shown in Table 5 to obtain copolymers (acrylic resin) A1 to A17 shown in Table 5. Note that, the content of the acrylic resin in the aqueous surface treating agent in Table 3 is the mass (mass percent) with respect to the total solid content of the aqueous surface treating agent.

[Table 4]

TABLE4

| Monomer | Abbreviation | Name |
|---|---|---|
| b1 | ST | Styrene |
| b2 | AA | Acrylic Acid |
| | MAA | Methacrylate |
| b3 | BA | Butyl Acrylate |
| | BMA | Butyl Methacrylate |
| | EA | Ethyl Acrylate |

(continued)

| Monomer | Abbreviation | Name |
|---------|--------------|------|
| b4 | AN | Acrylonitrile |

[Table 5]

TABLE 5

| Acrylic Resin Number | Monomer | | | | | | | |
|---|---|---|---|---|---|---|---|---|
| | b1 | | b2 | | b3 | | b4 | |
| | Type | Mass% | Type | Mass% | Type | Mass% | Type | Mass% |
| A1 | ST | 20 | AA | 3 | BA | 49 | AN | 28 |
| A2 | ST | 0 | AA | 11 | BA | 49 | AN | 40 |
| A3 | ST | 10 | AA | 3 | BA | 49 | AN | 38 |
| A4 | ST | 30 | AA | 3 | BA | 40 | AN | 27 |
| A5 | ST | 20 | AA | 0 | BA | 49 | AN | 31 |
| A6 | ST | 17 | AA | 15 | BA | 40 | AN | 28 |
| A7 | ST | 30 | AA | 3 | BA | 0 | AN | 67 |
| A8 | ST | 20 | AA | 3 | BA | 25 | AN | 52 |
| A9 | ST | 17 | AA | 3 | BA | 60 | AN | 20 |
| A10 | ST | 30 | AA | 3 | BA | 67 | AN | 0 |
| A11 | ST | 20 | AA | 3 | BA | 57 | AN | 20 |
| A12 | ST | 17 | AA | 2 | BA | 41 | AN | 40 |
| A13 | ST | 17 | MAA | 2 | BA | 40 | AN | 41 |
| A14 | ST | 17 | AA | 2 | EA | 40 | AN | 41 |
| A15 | ST | 17 | AA | 2 | BMA | 40 | AN | 41 |
| A16 | ST | 17 | AA | 2 | BA | 40 | AN | 41 |
| A17 | ST | 17 | AA | 2 | BA | 40 | AN | 41 |

The following compounds were prepared as a Zr compound, a V compound, a P compound, and a Co compound.

[Zr compound]

The following three compounds were prepared as Zr compounds.

B1: Potassium zirconium carbonate
B2: Ammonium zirconium carbonate
B3: Ammonium zirconium fluoride

[V compound]

C1: Vanadium acetylacetonate
C2: Vanadium oxyoxalate

[P compound]

D1: Phosphoric acid
D2: 1-hydroxyethane-1,1-diphosphonic acid

[Co compound]

E1: Cobalt carbonate
E2: Cobalt nitrate

Steel sheets on which plating layers of the respective test numbers shown in Table 1 (Table 1-1 and Table 1-2) were formed on both sides were degreased using a degreasing agent (alkaline degreasing agent manufactured by Nihon Parkerizing Co., Ltd., trade name: Fine Cleaner E6406) (initial make-up of electrolytic bath was 20 g/L, 60°C). Thereafter, each steel sheet was washed with water for 10 seconds using a spray (spray pressure 50 kPa).

The aqueous surface treating agent shown in Table 3 was applied to both surfaces of the degreased steel sheet having plating layers on both sides. Specifically, the aqueous surface treating agent was applied using a roll coater. At such time, the peripheral speed ratio of the roll coater was adjusted to adjust the coating thickness of the coating film. The steel sheets on which the coating films had been formed on the plating layers were heated using a hot air circulation oven (reheating furnace) while supplying hot air onto the coating films, to thereby dry the coating film formed on the plating layer.

A surface-treated steel sheet of each test number was produced by the above process. Note that, the thickness of the surface-treated steel sheet of each test number was 2.3 mm.

[Evaluation tests]

The following evaluation tests were performed on the surface-treated steel sheet of each test number.

(Test 1) Test to analyze chemical composition of plating layer
(Test 2) Test to measure coating mass of chemical conversion coating
(Test 3) [V] and [P] measurement test
(Test 4) Mg concentration difference Δ[Mg] measurement test
(Test 5) Corrosion resistance evaluation test
(Test 6) Adhesiveness evaluation test
(Test 7) Blackening resistance evaluation test
(Test 8) Dew formation discoloration resistance evaluation test

Hereunder, Test 1 to Test 8 are described.

[(Test 1) Test to analyze chemical composition of plating layer]

The content (mass%) of each element in the chemical composition of the plating layer of each test number was determined based on the method described above in the section [Method for measuring chemical composition and coating mass of plating layer 20]. The chemical composition of the plating layer of each test number determined as a result was as shown in Table 1 (Table 1-1 and Table 1-2).

[(Test 2) Test to measure coating mass of chemical conversion coating]

The coating mass of the chemical conversion coating of each test number was measured based on the method described above in the section [Method for measuring coating mass of chemical conversion coating 30]. The obtained results are shown in the column "Coating Mass of Chemical Conversion Coating (mg/m$^2$)" in Table 6.

[Table 6]

TABLE6

| Test Number | Coating Mass of Chemical Conversion Coating (mg/m²) | [V] (mg/m²) | [P] (mg/m²) | [Zr] (mg/m²) | [Co] (mg/m²) | F1 | F2 | Δ[Mg] (mass%) | F3 | Corrosion Resistance | Adhesiveness | Blackening Resistance | Dew Formation Discoloration Resistance | Remarks |
|---|---|---|---|---|---|---|---|---|---|---|---|---|---|---|
| 1 | 800 | 108.1 | 57.9 | 386.2 | 7.7 | 1.87 | 18.02 | 1.17 | 126 | E | E | E | E | Inventive Example of Present Invention |
| 2 | 700 | 98.0 | 56.0 | 259.2 | 6.8 | 1.75 | 16.33 | 1.20 | 118 | E | E | E | E | Inventive Example of Present Invention |
| 3 | 600 | 66.0 | 54.0 | 354.2 | 5.8 | 1.22 | 5.50 | 2.27 | 150 | E | E | E | E | Inventive Example of Present Invention |
| 4 | 500 | 42.5 | 37.5 | 165.2 | 4.8 | 1.13 | 12.14 | 0.67 | 29 | E | E | E | E | Inventive Example of Present Invention |
| 5 | 700 | 84.0 | 56.0 | 133.2 | 6.8 | 1.50 | 14.00 | 1.26 | 106 | E | E | E | E | Inventive Example of Present Invention |
| 6 | 800 | 88.0 | 57.9 | 406.3 | 7.7 | 1.52 | 17.60 | 1.04 | 92 | E | E | E | E | Inventive Example of Present Invention |
| 7 | 800 | 75.7 | 86.9 | 389.7 | 7.7 | 0.87 | 12.62 | 1.28 | 97 | E | E | E | E | Inventive Example of Present Invention |
| 8 | 600 | 81.1 | 43.4 | 289.7 | 5.8 | 1.87 | 13.52 | 1.18 | 96 | E | E | E | E | Inventive Example of Present Invention |
| 9 | 700 | 105.0 | 42.0 | 336.2 | 6.8 | 2.50 | 17.50 | 1.23 | 129 | E | E | E | E | Inventive Example of Present Invention |

(continued)

| Test Number | Coating Mass of Chemical Conversion Coating (mg/m²) | [V] (mg/m²) | [P] (mg/m²) | [Zr] (mg/m²) | [Co] (mg/m²) | F1 | F2 | Δ[Mg] (mass%) | F3 | Corrosion Resistance | Adhesiveness | Blackening Resistance | Dew Formation Discoloration Resistance | Remarks |
|---|---|---|---|---|---|---|---|---|---|---|---|---|---|---|
| 10 | 800 | 64.0 | 96.0 | 392.3 | 7.7 | 0.67 | 10.67 | 1.31 | 84 | E | E | E | E | Inventive Example of Present Invention |
| 11 | 500 | 45.0 | 40.0 | 260.2 | 4.8 | 1.13 | 7.50 | 1.22 | 55 | E | E | E | E | Inventive Example of Present Invention |
| 12 | 400 | 38.0 | 43.6 | 194.5 | 3.9 | 0.87 | 6.33 | 1.25 | 47 | E | E | E | E | Inventive Example of Present Invention |
| 13 | 700 | 84.0 | 70.0 | 329.2 | 6.8 | 1.20 | 14.00 | 1.28 | 108 | E | E | E | E | Inventive Example of Present Invention |
| 14 | 800 | 88.0 | 56.0 | 408.3 | 7.7 | 1.57 | 14.67 | 1.17 | 103 | E | E | E | E | Inventive Example of Present Invention |
| 15 | 300 | 42.0 | 24.0 | 141.1 | 2.9 | 1.75 | 7.00 | 1.15 | 48 | E | E | E | E | Inventive Example of Present Invention |
| 16 | 900 | 90.0 | 99.0 | 432.3 | 8.7 | 0.91 | 15.00 | 1.12 | 101 | E | E | E | E | Inventive Example of Present Invention |
| 17 | 800 | 88.0 | 72.0 | 392.3 | 7.7 | 1.22 | 14.67 | 1.22 | 107 | E | E | E | E | Inventive Example of Present Invention |
| 18 | 700 | 84.0 | 70.0 | 329.2 | 6.8 | 1.20 | 14.00 | 1.25 | 105 | E | E | E | E | Inventive Example of Present Invention |

| Test Number | Coating Mass of Chemical Conversion Coating (mg/m²) | [V] (mg/m²) | [P] (mg/m²) | [Zr] (mg/m²) | [Co] (mg/m²) | F1 | F2 | Δ[Mg] (mass%) | F3 | Corrosion Resistance | Adhesiveness | Blackening Resistance | Dew Formation Discoloration Resistance | Remarks |
|---|---|---|---|---|---|---|---|---|---|---|---|---|---|---|
| 19 | 600 | 54.0 | 42.0 | 318.2 | 5.8 | 1.29 | 9.00 | 1.17 | 63 | E | E | E | E | Inventive Example of Present Invention |
| 20 | 800 | 96.0 | 64.0 | 392.3 | 7.7 | 1.50 | 16.00 | 1.15 | 111 | E | E | E | E | Inventive Example of Present Invention |
| 21 | 500 | 65.0 | 50.0 | 230.2 | 4.8 | 1.30 | 10.83 | 1.22 | 79 | E | E | E | E | Inventive Example of Present Invention |
| 22 | 900 | 81.0 | 99.0 | 441.3 | 8.7 | 0.82 | 13.50 | 1.31 | 106 | E | E | E | E | Inventive Example of Present Invention |
| 23 | 1000 | 100.0 | 90.0 | 500.3 | 9.7 | 1.11 | 16.67 | 1.33 | 133 | E | E | E | E | Inventive Example of Present Invention |
| 24 | 700 | 70.0 | 70.0 | 343.2 | 6.8 | 1.00 | 11.67 | 1.17 | 82 | E | E | E | E | Inventive Example of Present Invention |
| 25 | 600 | 66.0 | 66.0 | 282.2 | 5.8 | 1.00 | 11.00 | 1.23 | 81 | E | E | E | E | Inventive Example of Present Invention |
| 26 | 400 | 48.0 | 36.0 | 192.1 | 3.9 | 1.33 | 8.00 | 1.26 | 61 | E | E | E | E | Inventive Example of Present Invention |
| 27 | 800 | 88.0 | 64.0 | 400.3 | 7.7 | 1.38 | 14.67 | 1.28 | 113 | E | E | E | E | Inventive Example of Present Invention |

| Test Number | Coating Mass of Chemical Conversion Coating (mg/m²) | [V] (mg/m²) | [P] (mg/m²) | [Zr] (mg/m²) | [Co] (mg/m²) | F1 | F2 | Δ[Mg] (mass%) | F3 | Corrosion Resistance | Adhesiveness | Blackening Resistance | Dew Formation Discoloration Resistance | Remarks |
|---|---|---|---|---|---|---|---|---|---|---|---|---|---|---|
| 28 | 800 | 80.0 | 72.0 | 400.3 | 7.7 | 1.11 | 13.33 | 1.17 | 93 | E | E | E | E | Inventive Example of Present Invention |
| 29 | 900 | 81.0 | 81.0 | 459.3 | 8.7 | 1.00 | 13.50 | 1.26 | 102 | E | E | E | E | Inventive Example of Present Invention |
| 30 | 700 | 70.0 | 70.0 | 343.2 | 6.8 | 1.00 | 11.67 | 1.12 | 78 | E | E | E | E | Inventive Example of Present Invention |
| 31 | 600 | 66.0 | 66.0 | 282.2 | 5.8 | 1.00 | 5.50 | 2.21 | 146 | E | E | E | E | Inventive Example of Present Invention |
| 32 | 500 | 50.0 | 50.0 | 245.2 | 4.8 | 1.00 | 14.29 | 0.84 | 42 | E | E | E | E | Inventive Example of Present Invention |
| 33 | 800 | 96.0 | 72.0 | 384.3 | 7.7 | 1.33 | 16.00 | 1.31 | 126 | E | E | E | E | Inventive Example of Present Invention |
| 34 | 700 | 63.0 | 70.0 | 350.2 | 6.8 | 0.90 | 10.50 | 1.23 | 78 | E | E | E | E | Inventive Example of Present Invention |
| 35 | 600 | 60.0 | 66.0 | 288.2 | 5.8 | 0.91 | 10.00 | 1.22 | 73 | E | E | E | E | Inventive Example of Present Invention |
| 36 | 800 | 108.0 | 57.9 | 386.3 | 7.7 | 1.86 | 18.00 | 2.11 | 228 | E | E | E | G | Inventive Example of Present Invention |

EP 4 582 587 A1

| Test Number | Coating Mass of Chemical Conversion Coating (mg/m$^2$) | [V] (mg/m$^2$) | [P] (mg/m$^2$) | [Zr] (mg/m$^2$) | [Co] (mg/m$^2$) | F1 | F2 | Δ[Mg] (mass%) | F3 | Corrosion Resistance | Adhesiveness | Blackening Resistance | Dew Formation Discoloration Resistance | Remarks |
|---|---|---|---|---|---|---|---|---|---|---|---|---|---|---|
| 37 | 800 | 108.0 | 57.9 | 386.3 | 7.7 | 1.86 | 18.00 | 2.04 | 221 | E | E | E | G | Inventive Example of Present Invention |
| 38 | 800 | 72.0 | 57.9 | 422.3 | 7.7 | 1.24 | 12.00 | 3.11 | 224 | E | E | E | G | Inventive Example of Present Invention |
| 39 | 800 | 72.0 | 57.9 | 422.3 | 7.7 | 1.24 | 12.00 | 3.13 | 225 | E | E | E | G | Inventive Example of Present Invention |
| 40 | 800 | 76.0 | 80.0 | 396.3 | 7.7 | 0.95 | 12.67 | 4.41 | 335 | E | E | E | G | Inventive Example of Present Invention |
| 41 | 800 | 76.0 | 80.0 | 396.3 | 7.7 | 0.95 | 12.67 | 4.36 | 332 | E | E | E | G | Inventive Example of Present Invention |
| 42 | 800 | 96.0 | 40.0 | 416.3 | 7.7 | 2.40 | 16.00 | 2.21 | 212 | E | E | E | G | Inventive Example of Present Invention |
| 43 | 800 | 96.0 | 40.0 | 416.3 | 7.7 | 2.40 | 16.00 | 2.22 | 213 | E | E | E | G | Inventive Example of Present Invention |
| 44 | 800 | 104.0 | 48.0 | 400.3 | 7.7 | 2.17 | 17.33 | 1.97 | 205 | E | E | E | G | Inventive Example of Present Invention |
| 45 | 250 | 30.0 | 22.5 | 120.1 | 2.4 | 1.33 | 5.00 | 1.22 | 36 | B | B | E | E | Comparative Example |
| 46 | 250 | 33.8 | 18.1 | 120.7 | 2.4 | 1.87 | 5.63 | 1.31 | 44 | B | B | E | E | Comparative Example |

(continued)

| Test Number | Coating Mass of Chemical Conversion Coating (mg/m²) | [V] (mg/m²) | [P] (mg/m²) | [Zr] (mg/m²) | [Co] (mg/m²) | F1 | F2 | Δ[Mg] (mass%) | F3 | Corrosion Resistance | Adhesiveness | Blackening Resistance | Dew Formation Discoloration Resistance | Remarks |
|---|---|---|---|---|---|---|---|---|---|---|---|---|---|---|
| 47 | 1100 | 99.0 | 79.7 | 580.7 | 10.6 | 1.24 | 16.50 | 1.33 | 132 | E | B | E | E | Comparative Example |
| 48 | 1100 | 99.0 | 79.7 | 580.7 | 10.6 | 1.24 | 16.50 | 1.17 | 116 | E | B | E | E | Comparative Example |
| 49 | 800 | 56.0 | 112.0 | 384.3 | 7.7 | 0.50 | 9.33 | 1.23 | 69 | E | E | B | E | Comparative Example |
| 50 | 800 | 56.0 | 112.0 | 384.3 | 7.7 | 0.50 | 9.33 | 1.26 | 71 | E | E | B | E | Comparative Example |
| 51 | 600 | 96.0 | 30.0 | 288.2 | 5.8 | 3.20 | 16.00 | 1.28 | 123 | B | E | E | E | Comparative Example |
| 52 | 600 | 96.0 | 30.0 | 288.2 | 5.8 | 3.20 | 16.00 | 1.17 | 112 | B | E | E | E | Comparative Example |
| 53 | 800 | 128.0 | 57.9 | 366.3 | 7.7 | 2.21 | 21.33 | 1.12 | 143 | E | E | E | B | Comparative Example |
| 54 | 800 | 128.0 | 57.9 | 366.3 | 7.7 | 2.21 | 21.33 | 1.22 | 156 | E | E | E | B | Comparative Example |
| 55 | 800 | 56.0 | 57.9 | 438.3 | 7.7 | 0.97 | 18.67 | 0.61 | 34 | B | E | E | E | Comparative Example |

EP 4 582 587 A1

38

[(Test 3) [V] and [P] measurement test]

The V mass [V] (mg/m$^2$) and the P mass [P] (mg/m$^2$) in the chemical conversion coating were determined based on the method described above in the section [Method for measuring Zr mass, V mass, P mass, and Co mass in chemical conversion coating 30]. The obtained V mass [V] and P mass [P] were used to determine F1 (= [V]/[P]). In addition, F2 (= [V]/[Mg]b) was determined using the content of Mg [Mg]b and the V mass [V] of the chemical composition of the plating layer. The determined V mass [V] (mg/m$^2$), P mass [P] (mg/m$^2$), F1 value, and F2 value are shown in Table 6.

Note that, the result of measuring the components of the chemical conversion coating based on the methods described in the above sections [Method for measuring Zr mass, V mass, P mass, and Co mass in chemical conversion coating 30] and [Method for confirming acrylic resin in chemical conversion coating 30 and method for measuring content of acrylic resin] showed that, in each test number, the chemical conversion coating contained Zr, V, P, and Co and acrylic resin. Further, the Zr content (mass%), V content (mass%), P content (mass%), Co content (mass%), and acrylic resin content (mass%) in the chemical conversion coating were as shown in Table 3. In addition, the content of each component in the acrylic resin in the chemical conversion coating 30 was determined based on the method described above in the section [Method for measuring content of each component in acrylic resin in chemical conversion coating 30]. The content of each component in the acrylic resin determined as a result was as shown in Table 5.

[(Test 4) Mg concentration difference Δ[Mg] measurement test]

The Mg concentration difference Δ[Mg] (mass%) was determined based on the method described above in the section [Method for measuring Mg concentration difference Δ[Mg]]. In addition, F3 (= Δ[Mg] × [V]) was determined based on the obtained Mg concentration difference Δ[Mg] (mass%), and the V mass [V] (mg/m$^2$) in the chemical conversion coating. The determined Mg concentration difference Δ[Mg] (mass%) is shown in the column "Δ[Mg] (mass%)" in Table 6. Further, the determined F3 value is shown in the column "F3" in Table 6.

[(Test 5) Corrosion resistance evaluation test]

A flat sheet specimen was taken from the surface-treated steel sheet of each test number. The size of the flat sheet specimen was 50 mm × 100 mm × the sheet thickness. A salt spray test in accordance with JIS Z 2371: 2015 was conducted on the flat sheet specimen for 240 hours. The surface of the flat sheet specimen after the test was observed to determine the area fraction of white rust. Corrosion resistance was evaluated as follows based on the determined area fraction of white rust.

E (Excellent): Area fraction of white rust is 5.0% or less
B (Bad): Area fraction of white rust is more than 5.0%

The obtained results are shown in the column "Corrosion Resistance" in Table 6.

[(Test 6) Adhesiveness evaluation test]

For each test number, two test specimens were taken from the surface-treated steel sheet. The size of each test specimen was as follows: width: 25 mm, thickness: sheet thickness, and length: 100 mm.

As illustrated in FIG. 3, the two test specimens 100 were arranged so that end parts of the two test specimens 100 overlapped, and an adhesive 120 was applied at a portion where the two test specimens 100 overlapped. The area of a bonded portion was 25 mm in width × 12.5 mm in length. An acrylic adhesive "Hardloc" (manufactured by Denka Co. Ltd., trade name: c355-20) was used as the adhesive. After applying the adhesive and bonding together the two test specimens 100 as illustrated in FIG. 3, a cover plate 150 was placed at an end part of each test specimen 100 to produce a lap shear test piece 200.

A tension shear test was conducted using the produced lap shear test piece. At such time, the distance between the chucks was set to 112.5 mm, and the tensile speed was set to 2 mm/min. The tensile shear load (N) was determined by the tension shear test performed under the above conditions.

The adhesiveness was evaluated as follows based on the determined tensile shear load.

E: Tensile shear load is 5.2 × 10$^3$N or more
B: Tensile shear load is less than 5.2 × 10$^3$N

The obtained results are shown in the column "Adhesiveness" in Table 6.

[(Test 7) Blackening resistance evaluation test]

A test specimen with dimensions of 50 mm $\times$ 100 mm $\times$ the sheet thickness was taken from the surface-treated steel sheet of each test number. Using a thermo-hygrostat tester, the test specimen was allowed to stand for 144 hours in an atmosphere with a temperature of 70°C and a relative humidity (RH) of 85%.

A L* value, an a* value, and a b* value were determined with respect to the surface of the test specimen before the test and the surface of the test specimen after the test. Specifically, with respect to the surface of the test specimen before the test and the surface of the test specimen after the test, the L* value, the a* value, and the b* value were determined in the CIELAB color space by the SCE method using the CIE standard illuminant D65 as a light source with a visual field angle of 10°. Note that, the SCE method is defined in JIS Z 8722: 2009. The color difference $\Delta E^*$ was determined according to the following formula based on the L* value, the a* value, and the b* value before and after the test.

$$\Delta E^* = \{(\Delta L^*)^2 + (\Delta a^*)^2 + (\Delta b^*)^2\}^{1/2}$$

$$\Delta L^* = L^* \text{ after test - } L^* \text{ before test}$$

$$\Delta a^* = a^* \text{ after test - } a^* \text{ before test}$$

$$\Delta b^* = b^* \text{ after test - } b^* \text{ before test}$$

Note that, a colorimeter (trade name: CM-2600d) manufactured by Konica Minolta, Inc. was used to determine the L* value, the a* value, and the b* value before and after the test.

The blackening resistance was evaluated as follows based on the determined value of AE*.

E:

$$\Delta E^* \leq 3.0$$

B:

$$\Delta E^* > 3.0$$

The obtained results are shown in the column "Blackening Resistance" in Table 6.

[(Test 8) Dew formation discoloration resistance evaluation test]

A test specimen with dimensions of 50 mm $\times$ 100 mm $\times$ the sheet thickness was taken from the surface-treated steel sheet of each test number. Six drops of pure water were dropped on the surfaces of the test specimens. At such time, each drop was dropped on a separate region from the other drops. After the drops were dropped, the test specimen was left to stand in the air at normal temperature for 12 hours to dry the water drops. After the 12 hours had elapsed, the surface of the test specimen was observed, and the number of regions which had changed color among the 12 regions where the water drops had been dropped was confirmed. The dew formation discoloration resistance was evaluated as follows according to the number of discolored regions.

E: There are 2 or less discolored regions.
G: There are 3 to 5 discolored regions.
B: There are 6 or more discolored regions.

The obtained results are shown in the column "Dew Formation Discoloration Resistance" in Table 6.

[Evaluation results]

Referring to Table 6, in the surface-treated steel sheets of Test Nos. 1 to 44, the chemical composition of the plating layer was appropriate, and the chemical conversion coating contained Zr, V, P, and Co and acrylic resin. In addition, the coating mass of the chemical conversion coating was appropriate, and F1 and F2 were also appropriate. Therefore, excellent corrosion resistance, excellent adhesiveness to the adhesive, and excellent blackening resistance were obtained, and furthermore, excellent dew formation discoloration resistance was obtained.

In particular, in the case of the surface-treated steel sheets of Test Nos. 1 to 35, the preferable production conditions 1 to 3 were satisfied. Consequently, F1 and F2 were appropriate, and in addition, F3 was appropriate. Therefore, in comparison to Test Nos. 36 to 44, more excellent dew formation discoloration resistance was obtained.

On the other hand, in Test Nos. 45 and 46, the coating mass of the chemical conversion coating was too small. Consequently, sufficient corrosion resistance and sufficient adhesiveness were not obtained.

In Test Nos. 47 and 48, the coating mass of the chemical conversion coating was too large. Consequently, sufficient adhesiveness was not obtained.

In Test Nos. 49 and 50, F1 was too low. Consequently, sufficient blackening resistance was not obtained.

In Test Nos. 51 and 52, F1 was too high. Consequently, sufficient corrosion resistance was not obtained.

In Test Nos. 53 and 54, F2 was too high. Consequently, sufficient dew formation discoloration resistance was not obtained.

In Test No. 55, the content of Mg in the plating layer was too low. Consequently, sufficient corrosion resistance was not obtained.

An embodiment of the present disclosure has been described above. However, the embodiment described above is merely an example for carrying out the present disclosure. Therefore, the present disclosure is not limited to the above-described embodiment, and can be implemented by appropriately modifying the above-described embodiment within a range not departing from the gist thereof.

**Claims**

1. A surface-treated steel sheet, comprising:

   a base steel sheet,
   a plating layer formed on the base steel sheet, and
   a chemical conversion coating formed on the plating layer,
   wherein:

   a chemical composition of the plating layer consists of, in mass%,
   Al: more than 5.0 to less than 25.0%,
   Mg: more than 3.0 to less than 12.5%,
   Sn: 0 to 3.00%,
   Bi: 0 to 5.00%,
   In: 0 to 2.00%,
   Ca: 0 to 3.00%,
   Y: 0 to 3.00%,
   La: 0 to 3.00%,
   Ce: 0 to 3.00%,
   Si: 0 to 2.50%,
   Cr: 0 to 0.5%,
   Ti: 0 to 0.5%,
   Ni: 0 to 0.5%,
   Co: 0 to 0.5%,
   V: 0 to 0.5%,
   Nb: 0 to 0.5%,
   Cu: 0 to 0.5%,
   Mn: 0 to 0.5%,
   Fe: 0 to 5.0%,
   Sr: 0 to 0.5%,
   Sb: 0 to 0.5%,
   Pb: 0 to 0.5%, and
   B: 0 to 0.5%,
   with the balance being Zn in an amount of 65.0% or more and impurities;
   the chemical conversion coating comprises:

   Zr, V, P, and Co, and
   acrylic resin;

a coating mass of the chemical conversion coating is 300 to 1000 mg/m$^2$;
a V mass [V] mg/m$^2$ in the chemical conversion coating, and a P mass [P] mg/m$^2$ in the chemical conversion coating satisfy Formula (1); and
a content of Mg [Mg]b mass% in the chemical composition of the plating layer and the V mass [V] mg/m$^2$ satisfy Formula (2).

$$0.60 \leq [V]/[P] \leq 2.80 \quad (1)$$

$$0 < [V]/[Mg]b \leq 20.00 \quad (2)$$

2. The surface-treated steel sheet according to claim 1, wherein, in addition, an Mg concentration difference $\Delta$[Mg] mass% and the V mass [V] mg/m$^2$ satisfy Formula (3), the Mg concentration difference $\Delta$[Mg] mass% being a difference between an Mg concentration [Mg]s mass% in an outer layer of the plating layer obtained by elementary analysis in a depth direction of the plating layer using glow discharge optical emission spectroscopy and the content of Mg [Mg]b mass% in the chemical composition of the plating layer.

$$\Delta[Mg] \times [V] \leq 200 \quad (3)$$

3. The surface-treated steel sheet according to claim 1 or claim 2, wherein the chemical composition of the plating layer contains one or more kinds of element selected from a group consisting of, in mass%,

Sn: 0.01 to 3.00%,
Bi: 0.01 to 5.00%,
In: 0.01 to 2.00%,
Ca: 0.01 to 3.00%,
Y: 0.01 to 3.00%,
La: 0.01 to 3.00%,
Ce: 0.01 to 3.00%,
Si: 0.01 to 2.50%,
Cr: 0.1 to 0.5%,
Ti: 0.1 to 0.5%,
Ni: 0.1 to 0.5%,
Co: 0.1 to 0.5%,
V: 0.1 to 0.5%,
Nb: 0.1 to 0.5%,
Cu: 0.1 to 0.5%,
Mn: 0.1 to 0.5%,
Fe: 0.1 to 5.0%,
Sr: 0.1 to 0.5%,
Sb: 0.1 to 0.5%,
Pb: 0.1 to 0.5%, and
B: 0.1 to 0.5%.

FIG. 1

# FIG. 2

1

| | |
|---|---|
| | —30 |
| | —20 |
| | —10 |

# FIG. 3

200

150    100    120    100    150

|←37.5mm→|←50.0mm→|←12.5mm→|←50.0mm→|←37.5mm→|

**INTERNATIONAL SEARCH REPORT**

| International application No. |
| --- |
| **PCT/JP2023/031546** |

| | |
| --- | --- |
| **A.** | **CLASSIFICATION OF SUBJECT MATTER** |
| | *C23C 28/00*(2006.01)i; *C22C 18/04*(2006.01)i; *C23C 2/06*(2006.01)i; *C23C 22/60*(2006.01)i<br>FI:   C23C28/00 C; C23C2/06; C22C18/04; C23C22/60 |
| | According to International Patent Classification (IPC) or to both national classification and IPC |

| | |
| --- | --- |
| **B.** | **FIELDS SEARCHED** |
| | Minimum documentation searched (classification system followed by classification symbols)<br>    C23C28/00; C22C18/04; C23C2/06; C23C22/60 |
| | Documentation searched other than minimum documentation to the extent that such documents are included in the fields searched<br>    Published examined utility model applications of Japan 1922-1996<br>    Published unexamined utility model applications of Japan 1971-2023<br>    Registered utility model specifications of Japan 1996-2023<br>    Published registered utility model applications of Japan 1994-2023 |
| | Electronic data base consulted during the international search (name of data base and, where practicable, search terms used) |

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | WO 2017/155028 A1 (NIPPON STEEL & SUMITOMO METAL CORP.) 14 September 2017 (2017-09-14)<br>    claims, paragraphs [0017], [0102]-[0119], table 4, example 11 | 1, 3 |
| A | | 2 |
| Y | WO 2009/004684 A1 (NIHON PARKERIZING CO., LTD.) 08 January 2009 (2009-01-08)<br>    claims, paragraphs [0025]-[0027], [0042] | 1, 3 |
| A | | 2 |
| A | WO 2018/083784 A1 (NIPPON STEEL CORP.) 11 May 2018 (2018-05-11)<br>    entire text, all drawings | 1-3 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 November 2023** | **28 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/031546**

| Patent document cited in search report | Publication date (day/month/year) | Patent family member(s) | Publication date (day/month/year) |
|---|---|---|---|
| WO 2017/155028 A1 | 14 September 2017 | US 2019/0010613 A1 claims, paragraphs [0064]-[0066], [0182]-[0198], table 4, example 11 KR 10-2018-0088685 A CN 108474119 A | |
| WO 2009/004684 A1 | 08 January 2009 | KR 10-2010-0007990 A CN 101688309 A | |
| WO 2018/083784 A1 | 11 May 2018 | CN 109891000 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002030460 A
- WO 2007123276 A
- WO 2007069783 A
- WO 2009004684 A
- JP 2003055777 A
- JP 2005097733 A
- WO 2017155028 A